# EUROPEAN PATENT APPLICATION

(11) **EP 4 510 737 A1**
(43) Date of publication of application: **19.02.2025**
(21) Application number: 23795151.2
(22) Date of filing: 19.04.2023
(51) Int. Cl.: H04W 72/04

(54) **METHOD AND APPARATUS FOR RESOURCE SELECTION**

(30) Priority: 29.04.2022 CN 202210476430
(71) Applicant: Huawei Technologies Co., Ltd., Shenzhen, Guangdong 518129 (CN)
(72) Inventor: ZHANG, Tianhong, Shenzhen, Guangdong 518129 (CN); YANG, Fan, Shenzhen, Guangdong 518129 (CN); LI, Chao, Shenzhen, Guangdong 518129 (CN); HUANG, Haining, Shenzhen, Guangdong 518129 (CN); LI, Junyao, Shenzhen, Guangdong 518129 (CN)
(74) Representative: Thun, Clemens
(86) International application number: PCT/CN2023/089273
(87) International publication number: WO 2023/207718

(57) **Abstract**

This application provides a resource selection method and apparatus. The method includes: A first terminal device performs listen before talk LBT; and the first terminal device sends sidelink information in a first time unit, where the first time unit includes a time unit in which the first terminal device successfully performs the LBT or a next time unit of the time unit in which the first terminal device successfully performs the LBT. According to technical solutions provided in this application, a terminal device determines, based on an LBT result, a resource used to transmit sidelink information. This helps ensure fairness in channel access of various types of terminal devices.

## Description

This application claims priority to Chinese Patent Application No. 202210476430.5, filed with the China National Intellectual Property Administration on April 29, 2022 and entitled "RESOURCE SELECTION METHOD AND APPARATUS", which is incorporated herein by reference in its entirety.

### TECHNICAL FIELD

This application relates to the communication field, and more specifically, to a resource selection method and apparatus.

### BACKGROUND

Communication on an unlicensed spectrum needs to comply with some specifications, for example, listen before talk (listen before talk, LBT), to ensure fairness in channel access of various types of user equipments (user equipments, UEs) that communicate on the spectrum.

In a current sideline (sidelink, SL) communication technology, for example, in an SL communication technology in new radio (new radio, NR), a used spectrum is a licensed spectrum or a dedicated spectrum, and a related specification of an unlicensed spectrum is not considered. As a result, the current SL communication technology cannot be well integrated with a communication technology on the unlicensed spectrum. For example, in an SL communication scenario in NR, a UE selects, based only on a resource sensing result, a resource used for communication between devices, and does not comply with LBT. Therefore, during SL communication on the unlicensed spectrum, fairness in channel access of various types of UEs cannot be ensured.

### SUMMARY

This application provides a resource selection method and apparatus. For example, the method may be used for communication in a sidelink on unlicensed spectrum (sidelink on unlicensed spectrum, SL-U) scenario. In the method, a resource used to transmit sidelink information is determined based on an LBT result, so that fairness in channel access of various types of UEs can be ensured.

According to a first aspect, a resource selection method is provided. The method may be performed by a terminal device, or may be performed by a chip, a chip system, or a circuit configured in a terminal device. This is not limited in this application. For ease of description, an example in which the method is performed by a first terminal device is used below for description.

The method may include: The first terminal device performs listen before talk LBT; and the first terminal device sends sidelink information in a first time unit, where the first time unit includes a time unit in which the first terminal device successfully performs the LBT or a next time unit of the time unit in which the first terminal device successfully performs the LBT.

The time unit may be, for example, a slot.

The sidelink information may include at least one of a PSCCH, a PSSCH, and a PSFCH.

The PSCCH may be used to carry control information, the PSSCH may be used to carry control information and/or data, and the PSFCH may be used to carry feedback information. Therefore, that the sidelink information includes at least one of the PSCCH, the PSSCH, and the PSFCH may also be understood as that the sidelink information includes at least one of sidelink data information, sidelink control information, and sidelink feedback information.

In this embodiment, starting from a time unit n, the first terminal device may perform LBT, in other words, perform channel access, so that the first terminal device can select, based on a result of performing the LBT, a resource for sending the sidelink information. Specifically, if the LBT succeeds, the first terminal device may access a channel and send the sidelink information in the first time unit. The first time unit includes the slot in which the first terminal device successfully performs the LBT or the next slot of the slot in which the first terminal device successfully performs the LBT.

The slot in which the LBT succeeds may also be understood as a slot in which an LBT counter N is equal to 0.

In a possible case, the slot in which the LBT succeeds can be used to send the sidelink information. For example, if a moment at which the LBT succeeds is at a start location of the slot, a first slot includes the slot in which the LBT succeeds.

In another possible case, the slot in which the LBT succeeds cannot be used to send the sidelink information. For example, if a moment at which the LBT succeeds is in a middle location of the slot, and the slot after the location is insufficient for sending the sidelink information, the first slot includes the next slot of the slot in which the LBT succeeds.

According to the method in this embodiment, the first terminal device may immediately send the sidelink information after the LBT succeeds, in other words, send the sidelink information in the slot in which the first terminal device successfully performs the LBT or the next slot of the slot in which the first terminal device successfully performs the LBT. Therefore, this can ensure fairness in channel access of various types of UEs, and help reduce a delay of sending the sidelink information by the first terminal device.

With reference to the first aspect, in some implementations of the first aspect, that the first terminal device sends sidelink information in a first time unit includes: The first terminal device sends the sidelink information in the first time unit and at least one time unit after the first time unit.

According to the method in this embodiment, because the sidelink information may be sent in more than one time unit, the first terminal device may send a plurality of pieces of sidelink information after the LBT succeeds. For example, the first terminal device may send initially transmitted information and at least one piece of retransmitted information in the first time unit and at least one time unit after the first time unit. The plurality of pieces of sidelink information include the initially transmitted information and the at least one piece of retransmitted information.

With reference to the first aspect, in some implementations of the first aspect, the method further includes: The first terminal device sends first control information in a second time unit, where the first control information indicates a first reserved resource of the sidelink information, and the first reserved resource is a resource determined by the first terminal device based on a sensing result.

In this embodiment, the first terminal device may send the first control information in the second time unit. A time unit in which the first terminal device sends the first control information is after a time unit in which the first terminal device selects, based on the sensing result, a resource that can be used to send the sidelink information. Therefore, the first control information may indicate a reserved resource that is based on the sensing result, in other words, the first reserved resource is a resource determined based on the sensing result.

That the first reserved resource is a resource determined based on the sensing result may alternatively be understood as that the first reserved resource does not include a reserved resource of another terminal device (for example, a second terminal device), or may be understood as that the first reserved resource belongs to a resource remaining after the first terminal device excludes a reserved resource of another terminal device. That the first control information indicates the reserved resource that is based on the sensing result may also be understood as that when indicating the reserved resource by using the first control information, the first terminal device considers a reserved resource of another terminal device, thereby avoiding a resource collision between the first reserved resource and the reserved resource of the another terminal device.

In an optional embodiment, if the first time unit is before a first moment, the first terminal device sends the first control information in the second time unit. The first moment is a moment at which the first terminal device selects, based on the sensing result, a resource that can be used to send the sidelink information, in other words, the first moment is a moment at which the first terminal device completes processing of the sensing result.

In other words, when sending the sidelink information, the first terminal device has not selected, based on the sensing result, a resource that can be used to send the sidelink information. In this case, the first terminal device may first access a channel and send the sidelink information, and does not send, until selecting, based on the sensing result, a resource that can be used to transmit the sidelink information, the first control information to indicate the reserved resource that is based on the sensing result.

Optionally, a time for selecting, by the first terminal device based on the sensing result, a resource that can be used to send the sidelink information, in other words, a time for processing the sensing result by the first terminal device may be predefined, or may be indicated by a network device. This is not limited in this application.

According to the method in this embodiment, when the LBT succeeds, the first terminal device may have not selected, based on the sensing result, a resource that can be used to transmit the sidelink information. Therefore, the first terminal device may first send the sidelink information, and does not send, until selecting, based on the sensing result, a resource that can be used to transmit the sidelink information, the first control information to indicate the reserved resource of the first terminal device to another terminal device. When indicating the first reserved resource by using the first control information, the first terminal device considers the sensing result, in other words, considers a reserved resource of another terminal device. Therefore, this can avoid a resource collision between the reserved resource (the first reserved resource) of the first terminal device and the reserved resource of the another terminal device.

With reference to the first aspect, in some implementations of the first aspect, the first time unit is before a first moment, and a time interval between the first time unit and the first moment is greater than a third time interval. The first moment is a moment at which the first terminal device selects, based on the sensing result, a resource that can be used to send the sidelink information, in other words, the first moment is a moment at which the first terminal device completes processing of the sensing result.

The third time interval may be predefined/preconfigured, or may be indicated by a network device. This is not limited in this application.

According to the method in this embodiment, when sending the sidelink information, the first terminal device has not selected, based on the sensing result, a resource that can be used to transmit the sidelink information, and a time away from selecting a resource that can be used to transmit the sidelink information is greater than the third time interval. When the time interval between the first time unit and the first moment is relatively large, it may be considered that a channel status may change greatly before the first moment. Therefore, the first terminal device immediately sends the sidelink information after successfully performing the LBT, to avoid a case in which the first terminal device cannot access a channel due to an LBT failure caused by a channel status change.

With reference to the first aspect, in some implementations of the first aspect, the first time unit is before a first moment, and a time interval between the first time unit and the first moment is less than a third time interval. The first moment is a moment at which the first terminal device selects, based on the sensing result, a resource that can be used to send the sidelink information, in other words, the first moment is a moment at which the first terminal device completes processing of the sensing result.

The third time interval may be predefined/preconfigured, or may be indicated by a network device. This is not limited in this application.

With reference to the first aspect, in some implementations of the first aspect, the first time unit is after a second moment, and the second moment is a moment at which the first terminal device completes packet assembly.

With reference to the first aspect, in some implementations of the first aspect, a channel occupancy time COT that the first reserved resource is in is after a COT that the first time unit is in.

According to the method in this embodiment, when sending the first control information, the first terminal device has selected, based on the sensing result, a resource that can be used to transmit the sidelink information. Therefore, the first control information may indicate a resource in a COT after the COT that the first time unit is in, in other words, the first reserved resource may be the resource in the COT after the COT that the first time unit is in. Therefore, the first terminal device may send the first control information to reserve a resource in a next COT for the sidelink information.

Optionally, the first reserved resource includes a resource reserved by the first terminal device for a to-be-transmitted TB, the first reserved resource includes a resource reserved by the first terminal device for transmitting a next TB, or the first reserved resource includes a periodic reserved resource of the first terminal device.

With reference to the first aspect, in some implementations of the first aspect, the first control information includes a first time interval, where the first time interval is a time interval between the second time unit and a time unit that the first reserved resource is in; or the first control information includes a second time interval and a periodicity, where the second time interval is a difference between the first time interval and the periodicity, and the periodicity is a periodicity for which the first terminal device sends the sidelink information.

In a possible implementation, the first control information includes the first time interval, where the first time interval is a time interval between the second time unit and the time unit that the first reserved resource is in. In this case, the first control information may indicate the first reserved resource in a time unit that is after the first time interval after the second time unit. For example, if the second time unit is a time unit t, and the first time interval is T1, the first control information may indicate the first reserved resource in a time unit t+T1.

In another possible implementation, the first control information includes the second time interval and the periodicity, where the second time interval is the difference between the first time interval and the periodicity. In this case, the first time interval may be represented by a sum of the second time interval and the periodicity. For example, if the second time unit is a time unit t, the second time interval is T2, and the periodicity is Pᵣₛᵥₚ, where T2=T1-Pᵣₛᵥₚ, the first control information may indicate the first reserved resource in a time unit t+T2+Pᵣₛᵥₚ.

With reference to the first aspect, in some implementations of the first aspect, the second time unit is in a first COT, where the first COT is the COT that the first time unit is in, and the first time unit is before the second time unit; or the second time unit is in a second COT, where the first COT is before the second COT.

According to the method in this embodiment, the first control information may be sent in the first COT, or may be sent in the second COT. The first COT is the COT that the first time unit is in, in other words, the sidelink information is sent in the first COT. The first COT may also be referred to as a current COT.

In an example, the first control information may be sent in the first COT. In this case, the first time unit is before the second time unit.

In another example, the first control information may be sent in the second COT. In this case, the first COT is before the second COT in time domain.

With reference to the first aspect, in some implementations of the first aspect, the sidelink information includes second control information, the second control information indicates a second reserved resource of the first terminal device, and the second reserved resource and the first time unit are in a same COT.

That the sidelink information includes second control information may also be understood as that a resource that carries the sidelink information is also a resource that carries the second control information.

According to the method in this embodiment, when sending the sidelink information or when sending the second control information, the first terminal device may have not selected, based on the sensing result, a resource that can be used to send the sidelink information. Therefore, the first terminal device may indicate a reserved resource in a current COT by using the second control information, instead of indicating a reserved resource in a next COT by using the second control information, thereby helping avoid reserving a reserved resource of another terminal device, that is, avoid improper resource reservation.

With reference to the first aspect, in some implementations of the first aspect, identification information indicated by the first control information is the same as identification information indicated by the second control information, the identification information indicated by the first control information is some bits of the identification information indicated by the second control information, or some bits of the identification information indicated by the first control information are the identification information indicated by the second control information.

According to the method in this embodiment, in at least one of the foregoing manners, the first reserved resource of the sidelink information may be indicated by using the first control information. That the first reserved resource of the sidelink information is indicated by using the first control information may also be understood as that the first control information indicates the first reserved resource of data in a resource that the second control information is in.

With reference to the first aspect, in some implementations of the first aspect, the first time unit is a resource determined by the first terminal device based on a sensing result.

That the first time unit is a resource determined by the first terminal device based on a sensing result may alternatively be understood as that the first time unit does not include a reserved resource of another UE, or may be understood as that the first time unit belongs to a resource remaining after the first terminal device excludes a reserved resource of another terminal device.

In this embodiment, if the first terminal device successfully performs the LBT, and the first terminal device has selected, based on the sensing result, a resource that can be used to transmit the sidelink information, the first terminal device may access a channel and send the sidelink information in the first time unit. The resource that can be used to transmit the sidelink information includes the first time unit. If the first terminal device successfully performs the LBT, but the first terminal device has not selected, based on the sensing result, a resource that can be used to transmit the sidelink information, the first terminal device does not access a channel.

According to the method in this embodiment, when selecting a resource for sending the sidelink information, the first terminal device not only considers whether the LBT succeeds, but also considers whether a time unit (that is, the first time unit) for sending the sidelink information is a resource that is selected by the first terminal device based on the sensing result and that can be used to transmit the sidelink information. Therefore, a resource collision between terminal devices can be avoided, thereby ensuring reliability of sidelink transmission. In addition, the first terminal device sends the sidelink information after the LBT succeeds, so that fairness in channel access of various types of terminal devices can be ensured.

With reference to the first aspect, in some implementations of the first aspect, before the first terminal device successfully performs the LBT, the method further includes: The first terminal device successfully performs the LBT at least one time.

According to the method in this embodiment, before the first terminal device accesses a channel and sends the sidelink information, the first terminal device may successfully perform the LBT a plurality of times. The first terminal device may access the channel and send the sidelink information when successfully performing the LBT for a last time. For example, when the first terminal device successfully performs the LBT for the last time, or before the first terminal device successfully performs the LBT for the last time, the first terminal device selects, based on the sensing result, a resource that can be used to transmit the sidelink information, and the resource that can be used to transmit the sidelink information includes the first time unit in which the first terminal device successfully performs the LBT for the last time. In this case, the first terminal device may access the channel and send the sidelink information.

According to a second aspect, a resource selection method is provided. The method may be performed by a terminal device, or may be performed by a chip, a chip system, or a circuit configured in a terminal device. This is not limited in this application. For ease of description, an example in which the method is performed by a second terminal device is used below for description.

The method may include: The second terminal device receives first control information from a first terminal device, where the first control information indicates a first reserved resource of the first terminal device, the first reserved resource is related to first sidelink information sent by the first terminal device in a first time unit, and the first time unit includes a time unit in which the first terminal device successfully performs LBT or a next time unit of the time unit in which the first terminal device successfully performs the LBT; and the second terminal device determines, from a resource other than the first reserved resource based on the first control information, a resource used to send second sidelink information.

In this embodiment, that the second terminal device receives first control information from a first terminal device may also be understood as that the second terminal device detects the first control information from the first terminal device.

That the first reserved resource is related to first sidelink information sent by the first terminal device in a first time unit may be understood as that the first reserved resource is reserved for the first sidelink information in the first time unit, in other words, the first reserved resource is a reserved resource of the first sidelink information in the first time unit.

According to the method in this embodiment, the second terminal device may determine, from the resource other than the first reserved resource based on the first control information from the first terminal device, a resource used to send the second sidelink information, in other words, the second terminal device may send the second sidelink information on the resource other than the first reserved resource based on the first control information. Therefore, the second sidelink information can be prevented from being sent on the first reserved resource, thereby improving reliability of sending the first sidelink information by the first terminal device.

In an optional embodiment, a time unit that the first control information is in is after the first time unit. In other words, the first terminal device may first send the first sidelink information in the first time unit, and then indicate the first reserved resource by using the first control information. For example, the first terminal device may send the first control information after selecting, based on a sensing result, a resource that can be used to transmit the first sidelink information. Therefore, the first control information may indicate a reserved resource that is based on the sensing result, so that improper resource reservation can be avoided.

With reference to the second aspect, in some implementations of the second aspect, the method further includes: The second terminal device excludes the first reserved resource from a candidate resource set.

The candidate resource set is a candidate resource set of the second terminal device.

In this embodiment, the second terminal device may exclude the first reserved resource from the candidate resource set of the second terminal device based on the first control information, to avoid a resource collision caused by sending the second sidelink information on the first reserved resource.

That the first reserved resource is excluded from the candidate resource set may alternatively be understood as a manner of determining, from the resource other than the first reserved resource, a resource used to send the second sidelink information. In other words, that a resource used to send the second sidelink information is determined from the resource other than the first reserved resource includes: excluding the first reserved resource from the candidate resource set.

With reference to the second aspect, in some implementations of the second aspect, the first reserved resource is a resource determined by the first terminal device based on a sensing result.

That the first reserved resource is a resource determined based on a sensing result may alternatively be understood as that the first reserved resource does not include a reserved resource of another terminal device (for example, the second terminal device), or may be understood as that the first reserved resource belongs to a resource remaining after the first terminal device excludes a reserved resource of another terminal device. That the first control information indicates the reserved resource that is based on the sensing result may also be understood as that when indicating the reserved resource by using the first control information, the first terminal device considers a reserved resource of another terminal device, thereby avoiding a resource collision between the first reserved resource and the reserved resource of the another terminal device.

With reference to the second aspect, in some implementations of the second aspect, a channel occupancy time COT that the first reserved resource is in is after a COT that the first time unit is in.

According to the method in this embodiment, when sending the first control information, the first terminal device has selected, based on the sensing result, a resource that can be used to transmit the sidelink information. Therefore, the first control information may indicate a resource in a COT after the COT that the first time unit is in, in other words, the first reserved resource may be the resource in the COT after the COT that the first time unit is in. Therefore, the first terminal device may send the first control information to reserve a resource in a next COT for the sidelink information.

With reference to the second aspect, in some implementations of the second aspect, the first reserved resource includes a reserved resource that is after a first time interval after a time unit that the first control information is in.

According to the method in this embodiment, the first reserved resource includes the reserved resource that is after the first time interval after the time unit that the first control information is in. In other words, the first control information may indicate the first reserved resource in a time unit that is after the first time interval after the time unit that the first control information is in. For example, if the time unit that the first control information is in is a time unit t, and the first time interval is T1, the first control information may indicate the first reserved resource in a time unit t+T 1.

With reference to the second aspect, in some implementations of the second aspect, the first control information includes a first time interval, or a second time interval and a periodicity, where the second time interval is a difference between the first time interval and the periodicity, and the periodicity is a periodicity for which the first terminal device sends the first sidelink information.

In a possible implementation, the first control information includes the first time interval. In this case, the second terminal device may exclude, based on the first control information, the first reserved resource that is after the first time interval after the time unit that the first control information is in. For example, if the time unit that the first control information is in is a time unit t, and the first time interval is T1, the second terminal device may exclude the first reserved resource in a time unit t+T1 based on the first control information.

In another possible implementation, the first control information includes the second time interval and the periodicity, where the second time interval is the difference between the first time interval and the periodicity. In this case, the first time interval may be represented by a sum of the second time interval and the periodicity. For example, if the time unit that the first control information is in is a time unit t, the second time interval is T2, and the periodicity is Pᵣₛᵥₚ, where T2=T1-Pᵣₛᵥₚ, the second terminal device may exclude the first reserved resource in a time unit 1+T2+Pᵣₛᵥₚ based on the first control information.

According to a third aspect, a resource selection method is provided. The method may be performed by a terminal device, or may be performed by a chip, a chip system, or a circuit configured in a terminal device. This is not limited in this application. For ease of description, an example in which the method is performed by a second terminal device is used below for description.

The method may include: The second terminal device receives control information from a first terminal device, where the control information indicates a reserved resource of the first terminal device; and the second terminal device determines, from a resource other than the reserved resource and a first resource based on the control information, a resource used to send sidelink information, where the first resource is adjacent to the reserved resource in time domain.

In this embodiment, the second terminal device not only needs to determine, from a resource other than the reserved resource of the first terminal device, a resource used to send the sidelink information, but also needs to determine, from a resource other than the first resource, a resource used to send the sidelink information.

According to the method in this embodiment, because the second terminal device does not send the sidelink information on neither the reserved resource of the first terminal device nor the resource adjacent to the reserved resource in time domain, it is helpful to improve a success rate and reliability of sending the sidelink information by the first terminal device.

With reference to the third aspect, in some implementations of the third aspect, that the first resource is adjacent to the reserved resource in time domain includes: A time unit that the first resource is in is a preset time period before a time unit that the reserved resource is in, the time unit that the first resource is in is a preset time period after the time unit that the reserved resource is in, or the time unit that the first resource is in includes the preset time period before the time unit that the reserved resource is in and the preset time period after the time unit that the reserved resource is in.

According to the method in this embodiment, the second terminal device may not only exclude the reserved resource of the first terminal device, but also exclude the first resource. When the time unit that the first resource is in is the preset time period before the time unit that the reserved resource of the first terminal device is in, it is helpful to prevent the first terminal device from failing in performing LBT before the time unit that the reserved resource is in, thereby improving reliability of sending the sidelink information by the first terminal device. When the first resource is the preset time period after the time unit that the reserved resource of the first terminal device is in, if the first terminal device fails in performing LBT before the time unit that the reserved resource is in or in the time unit that the reserved resource is in, the first terminal device may further send the sidelink information based on an LBT result in the preset time period after the time unit that the reserved resource is in, thereby improving a success rate and reliability of sending the sidelink information by the first terminal device.

With reference to the third aspect, in some implementations of the third aspect, the method further includes: The second terminal device excludes the reserved resource and the first resource from a candidate resource set.

According to the method in this embodiment, to determine, from the resource other than the reserved resource and the first resource, a resource used to send the sidelink information, in an optional manner, the second terminal device excludes the reserved resource and the first resource from the candidate resource set. After excluding the reserved resource and the first resource from the candidate resource set, the second terminal device cannot send the sidelink information on the reserved resource and the first resource. Therefore, this helps improve a success rate and reliability of sending the sidelink information by the first terminal device.

With reference to the third aspect, in some implementations of the third aspect, the method further includes: The second terminal device does not perform LBT in the time unit that the reserved resource is in and the time unit that the first resource is in; or the second terminal device does not measure, in the time unit that the reserved resource is in and the time unit that the first resource is in, whether a channel is occupied.

In a scenario in which the second terminal device has not accessed a channel, to determine, from the resource other than the reserved resource and the first resource, a resource used to send the sidelink information, in an optional manner, in the time unit that the reserved resource is in and the time unit that the first resource is in, the second terminal device does not perform LBT or does not measure whether a channel is occupied. In this way, the second terminal device can be prevented from accessing a channel and sending the sidelink information in the time units that the reserved resource and the first resource are in, to prevent the first terminal device from failing in performing the LBT, thereby improving reliability of sending the sidelink information by the first terminal device.

According to a fourth aspect, a resource selection apparatus is provided. The apparatus is configured to perform the method according to any one of the possible implementations of the first aspect to the third aspect. Specifically, the apparatus may include a unit and/or a module, for example, a processing unit and/or a communication unit, configured to perform the method according to any one of the possible implementations of the first aspect to the third aspect.

In an implementation, the apparatus is a first terminal device or a second terminal device. When the apparatus is the first terminal device or the second terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a first terminal device or a second terminal device. When the apparatus is the chip, the chip system, or the circuit used in the first terminal device or the second terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a fifth aspect, a communication apparatus is provided. The apparatus includes at least one processor, configured to execute a computer program or instructions stored in a memory, to perform the method according to any one of the possible implementations of the first aspect to the third aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a first terminal device or a second terminal device.

In another implementation, the apparatus is a chip, a chip system, or a circuit used in a first terminal device or a second terminal device.

According to a sixth aspect, this application provides a processor, configured to perform the methods provided in the foregoing aspects.

Operations such as sending and obtaining/receiving that are related to the processor may be understood as operations such as outputting and receiving or inputting of the processor, or may be understood as sending and receiving operations performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable storage medium stores program code to be executed by a device, and the program code includes instructions used to perform the method according to any one of the possible implementations of the first aspect to the third aspect.

According to an eighth aspect, a computer program product including instructions is provided. When the computer program product is run on a computer, the computer is enabled to perform the method according to any one of the possible implementations of the first aspect to the third aspect.

According to a ninth aspect, a chip is provided. The chip includes a processor and a communication interface. The processor reads, through the communication interface, instructions stored in a memory, to perform the method according to any one of the implementations of the first aspect to the third aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the implementations of the first aspect to the third aspect.

According to a tenth aspect, a chip is provided. The chip includes a logic circuit and a communication interface. The communication interface is configured to receive to-be-processed data and/or information, and transmit the to-be-processed data and/or information to the logic circuit. The logic circuit is configured to perform the resource selection method according to any one of the implementations of the first aspect to the third aspect, and the communication interface is further configured to output a selected resource.

According to an eleventh aspect, a communication system is provided, including the first terminal device and the second terminal device described above.

### BRIEF DESCRIPTION OF DRAWINGS

FIG. 1 is a diagram of an example of a communication system applicable to this application;
FIG. 2 is a diagram of another example of a communication system applicable to this application;
FIG. 3 is a diagram of a transmission structure of a PSCCH, a PSSCH, and a PSFCH in NR;
FIG. 4 is a diagram of a transmission structure of a PSCCH and a PSSCH in NR;
FIG. 5 is a diagram of an example of a method in which a UE excludes a resource from a resource selection window based on a sensing result;
FIG. 6 is a diagram of an example of a resource selection method according to an embodiment of this application;
FIG. 7 is a diagram of a case in which a UE #1 sends SL information in a first slot;
FIG. 8 is a diagram of another case in which a UE #1 sends SL information in a first slot;
FIG. 9 is a diagram of an example in which a UE #1 sends SL information in a first slot in which LBT succeeds again;
FIG. 10 is a diagram of another example of a resource selection method according to an embodiment of this application;
FIG. 11 is a diagram of an example in which a UE #1 sends first control information in a first COT;
FIG. 12 is a diagram of an example in which a UE #1 sends first control information in a second COT;
FIG. 13 is a diagram of an example in which a service 1 and a service 2 are transmitted in a same COT;
FIG. 14 is a diagram of another example in which a service 1 and a service 2 are transmitted in a same COT;
FIG. 15 is a diagram of another example of a resource selection method according to an embodiment of this application;
FIG. 16 is a diagram of an example in which a UE #2 excludes a first reserved resource of a UE #1;
FIG. 17 is a diagram of another example of a resource selection method according to an embodiment of this application;
FIG. 18 is a diagram of an example in which a UE #2 excludes a reserved resource of a UE #1 and a first resource;
FIG. 19 is a diagram of another example in which a UE #2 excludes a reserved resource of a UE #1 and a first resource;
FIG. 20 is a diagram of another example in which a UE #2 excludes a reserved resource of a UE #1 and a first resource;
FIG. 21 is a schematic block diagram of a resource selection apparatus according to an embodiment of this application; and
FIG. 22 is a schematic block diagram of a communication apparatus according to an embodiment of this application.

### DESCRIPTION OF EMBODIMENTS

The following describes the technical solutions in embodiments of this application with reference to the accompanying drawings.

The technical solutions in this application may be applied to various scenarios of communication between terminal apparatuses, for example, a sidelink on unlicensed spectrum (sidelink on unlicensed spectrum, SL-U) scenario, a device to device (device to device, D2D) scenario, a vehicle to everything (vehicle to everything, V2X) scenario, and a machine type communication (machine type communication, MTC)/machine to machine (machine to machine, M2M) scenario.

The terminal apparatus may be, for example, a terminal device, or a module configured to implement a function of the terminal device, for example, a chip or a chip system. The chip or the chip system may be disposed in the terminal device.

The terminal device may also be referred to as a user equipment (user equipment, UE), a mobile station (mobile station, MS), a mobile terminal (mobile terminal, MT), or the like, and is a device that provides a user with voice and/or data connectivity. For example, the terminal device may include a handheld device, an in-vehicle device, or the like that has a wireless connection function. Currently, the terminal device may be a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, an XR device, an MR device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device in embodiments of this application may alternatively be an access terminal, a mobile device, a user terminal, a terminal, or a wireless communication device.

The terminal device in this application may be a device that includes a wireless receiving/sending function and that can provide a user with a communication service. Specifically, the terminal device may be a device in an SL-U system, a device in a V2X system, a device in a D2D system, a device in an MTC system, or the like. For example, the terminal may be an industrial robot, an industrial automation device, a user equipment (user equipment, UE), an access terminal, a subscriber unit, a subscriber station, a mobile station, a remote station, a remote terminal, a mobile device, a user terminal, a wireless terminal, a mobile terminal, a customer premise equipment (customer premise equipment, CPE), an in-vehicle terminal, a user agent, a user apparatus, a terminal in virtual reality, a terminal in augmented reality, a terminal in remote medical, a terminal in a smart grid, a terminal in smart furniture, a terminal in smart office, a terminal in smart wear, a terminal in smart transportation, a terminal in a smart city, or the like. For another example, the terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, an in-vehicle device, a wearable device, a terminal in a 5^{th} generation (5^{th} generation, 5G) network or a network after 5G, a terminal in a future evolved communication network, or the like.

The terminal device in this application may alternatively be various types of terminal devices that perform communication on an unlicensed spectrum, for example, a device in a wireless fidelity (wireless fidelity, Wi-Fi) scenario (which is briefly referred to as a Wi-Fi UE below), a device in a Bluetooth scenario (which is briefly referred to as a Bluetooth UE below), a device in a ZigBee (ZigBee) scenario (which is briefly referred to as a ZigBee UE below).

A specific technology and a specific device form that are used for the terminal device are not limited in embodiments of this application.

A network apparatus in this application may also be referred to as a network device, and is a device that provides access for the terminal apparatus. The network device may include a radio access network (radio access network, RAN) device, for example, a base station. The network device may alternatively be a device that communicates with the terminal device through an air interface. The network device may include an evolved NodeB (evolved NodeB), which may be briefly referred to as an eNB or an e-NodeB, in an LTE system or a long term evolution-advanced (long term evolution-advanced, LTE-A) system. The eNB is an apparatus that is deployed in a radio access network, that meets a 4th generation (4th generation, 4G) mobile communication technology standard, and that provides a wireless communication function for the terminal device. The network device may alternatively be a new radio controller (new radio controller, NR controller), may be a gNodeB (gNodeB, gNB) in a 5G system, may be a central network element (central unit), may be a new radio base station, may be a remote radio unit, may be a micro base station (also referred to as a small cell), may be a relay (relay), may be a distributed network element (distributed unit), may be various forms of macro base stations, or may be a transmission reception point (transmission reception point, TRP), a transmission measurement function (transmission measurement function, TMF), a transmission point (transmission point, TP), or any other radio access device. Embodiments of this application are not limited thereto. The network device may also include a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a remote radio unit (remote radio unit, RRU), a wireless fidelity (wireless fidelity, Wi-Fi) access point (access point, AP), a baseband pool (BBU pool) and an RRU in a cloud radio access network (cloud radio access network, CRAN), or the like. A specific technology and a specific device form that are used for the network device are not limited in embodiments of this application. For example, the network device may correspond to an eNB in a 4G system, and correspond to a gNB in a 5G system.

In this application, the network apparatus may alternatively be a customer premise equipment (customer premise equipment, CPE), a router, or the like.

In this application, the network apparatus may alternatively be a functional module, a chip, or a chip system. Optionally, the functional module, the chip, or the chip system may be disposed in the network apparatus.

In the descriptions of embodiments of this application, a network device is used as an example for description. A specific technology and a specific device form that are used for the network device are not limited in this application.

The following mainly describes the technical solutions in this application by using an SL-U communication scenario as an example.

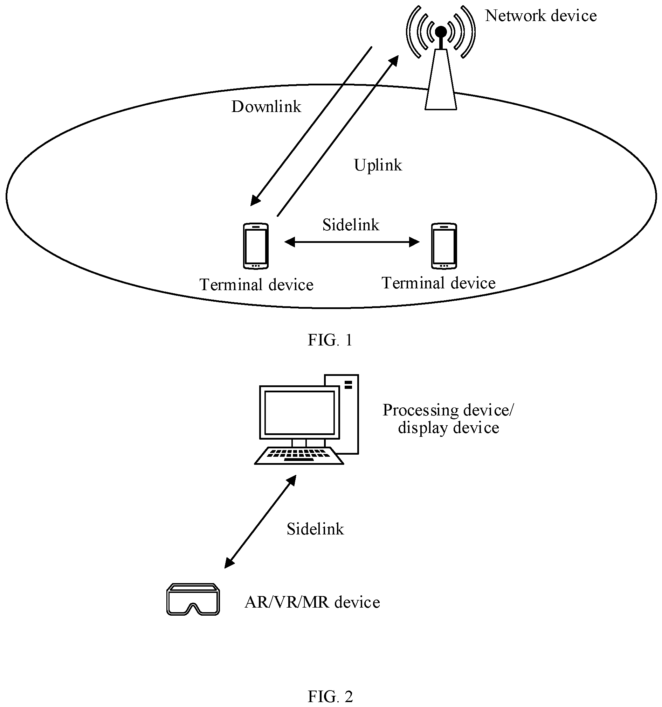

FIG. 1 and FIG. 2 are diagrams of communication systems applicable to this application.

As shown in FIG. 1, a terminal device in communication may be, for example, a mobile phone. A link for communication between the terminal device and a network device includes an uplink and a downlink, and a link for communication between terminal devices is a sidelink.

A specific technology and a specific device form that are used for the network device are not limited in this application.

As shown in FIG. 2, a terminal device of one party in communication may be, for example, a virtual reality (virtual reality, VR) device, an augmented reality (augmented reality, AR) device, or a mixed reality (mixed reality, MR) device, and a terminal device of the other party in communication may be, for example, a processing device or a display device.

It should be understood that, a specific form of the terminal device is not specially limited in embodiments of this application, and is merely an example for description herein.

It should be further understood that a type of the terminal device is not limited in this application. For example, the terminal device may be an SL UE, a Wi-Fi UE, a Bluetooth UE, or a ZigBee UE. For ease of description, an example in which the terminal device is an SL UE is mainly used as an example below for example description.

It should be further understood that, FIG. 1 and FIG. 2 are merely simplified schematic diagrams illustrated for ease of understanding, and do not constitute any limitation on the protection scope of this application. For example, the communication system may further include another terminal device, which is not drawn in FIG. 1 and FIG. 2.

It should be noted that, scenarios described in this application are intended to describe the technical solutions in this application more clearly, and do not constitute any limitation on the technical solutions in this application. A person of ordinary skill in the art can know that, with emergence of new service scenarios, the technical solutions provided in embodiments of this application are also applicable to similar technical problems.

For ease of understanding, the following describes nouns, terms, or technologies in this application.

### 1. Resource

The resource is a time-frequency resource in a resource pool.

A time domain resource includes a symbol (symbol), a slot (slot), a mini-slot (mini-slot), a partial slot (partial slot), a subframe (subframe), a radio frame (frame), a sensing slot (sensing slot), and the like. A frequency domain resource includes a resource element (resource element, RE), a resource block (resource block, RB), a subchannel (subchannel), a resource pool (resource pool), a bandwidth (bandwidth), a bandwidth part (bandwidth part, BWP), a carrier (carrier), a channel (channel), an interlacing (interlace), and the like.

For ease of description, in this specification, an example in which the time domain resource is a slot is used to describe a resource for transmitting a PSCCH and/or a resource for transmitting a PSSCH.

### 2. Transmission structures of a physical sidelink control channel (physical sidelink control channel, PSCCH), a physical sidelink shared channel (physical sidelink shared channel, PSSCH), and a physical sidelink feedback channel (Physical Sidelink Feedback Channel, PSFCH)

According to the Rel-16/Rel-17NR protocol, a scheduling granularity of the PSCCH and/or a scheduling granularity of the PSSCH are/is in units of one slot in time domain, and are/is in units of one or more consecutive subchannels in frequency domain. A sending UE may send sidelink information on the resource. One resource can carry three channels: the PSCCH, the PSSCH, and the PSFCH, and a demodulation reference signal (demodulation reference signal, DMRS), a channel state information reference signal (channel state information reference signal, CSI-RS), or another signal. The PSCCH carries first-order sidelink control information (sidelink control information, SCI), the PSSCH carries second-order SCI and/or data, and the PSFCH carries feedback information.

### (1) Transmission structure of the PSCCH:

The PSCCH carries the first-order SCI. In time domain, the PSCCH occupies two or three orthogonal frequency division multiplexing (orthogonal frequency division multiplexing, OFDM) symbols starting from the 2^{nd} sidelink symbol. In frequency domain, a physical resource block (physical resource block, PRB) carrying the PSCCH starts from a lowest PRB on a lowest subchannel of an associated PSSCH, and a quantity of PRBs occupied by the PSCCH is in a subband range of one PSSCH. The PSCCH includes {10, 12, 15, 20, 25} resource blocks (resource blocks, RBs), and a specific value is preconfigured or configured by a network.

### (2) Transmission structure of the PSSCH:

The PSSCH carries the second-order SCI and data. In time domain, on a resource without the PSFCH, 12 symbols are used to carry the PSSCH; and on a resource with the PSFCH, nine symbols are used to carry the PSSCH. In frequency domain, the PSSCH occupies consecutive L_{subCh} subchannels. In addition, in a slot, the 1^{st} OFDM symbol copies information sent on the 2^{nd} symbol for automatic gain control (Automatic Gain Control, AGC).

### (3) Transmission structure of the PSFCH:

The PSFCH carries the feedback information. On a resource with the PSFCH, a second-to-last OFDM symbol and a third-to-last OFDM symbol are used to carry the PSFCH. A signal on the third-to-last symbol is repetition of a signal on the second-to-last symbol, to help a receiving UE perform AGC adjustment.

In addition, the UE may respectively receive and send the PSSCH in two consecutive slots, and the UE may alternatively separately receive and send the PSSCH and the PSFCH in a same slot. Therefore, after a symbol on which the PSSCH is located and a symbol on which the PSFCH is located, an additional symbol (GAP symbol) may need to be added for conversion between receiving and sending of the UE.

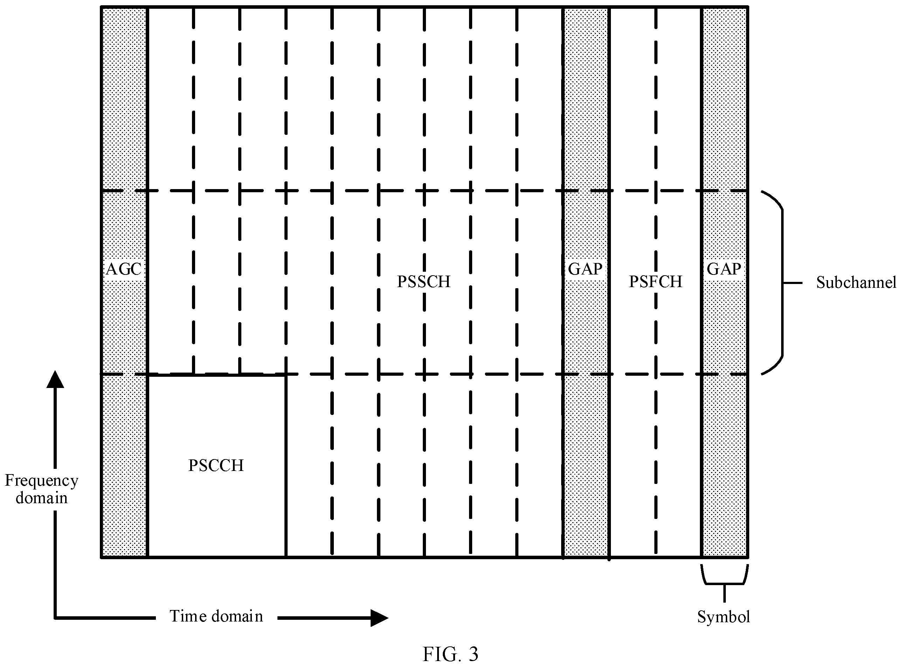

FIG. 3 is a diagram of a transmission structure of a PSCCH, a PSSCH, and a PSFCH in NR. The PSCCH, the PSSCH, and the PSFCH may be carried in one slot and on three subchannels, where one slot includes 14 symbols.

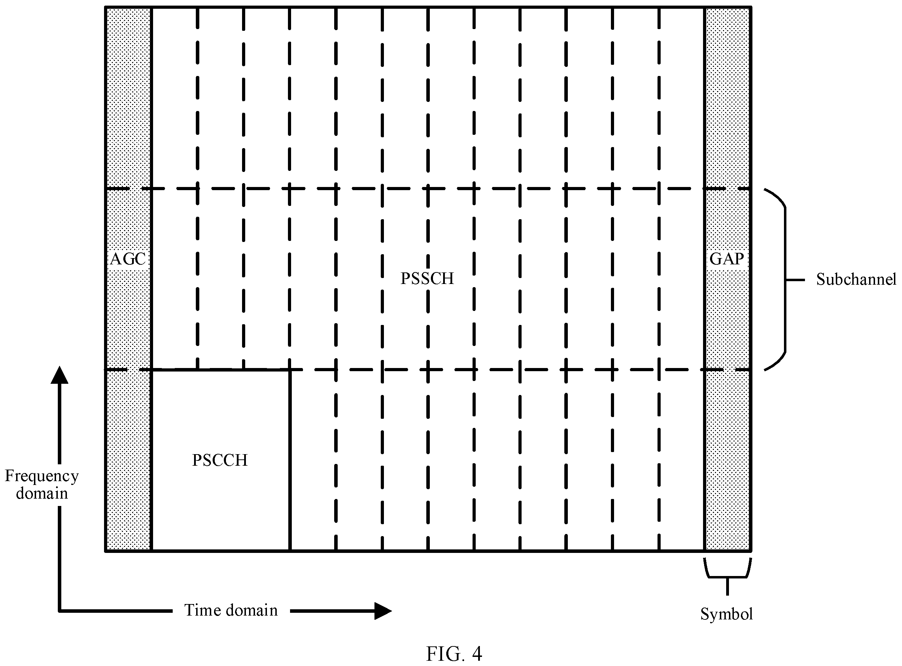

FIG. 4 is a diagram of a transmission structure of a PSCCH and a PSSCH in NR. There is no PSFCH occasion in a slot of the transmission structure, and the PSCCH and the PSSCH may be carried in one slot and on three subchannels, where one slot includes 14 symbols.

### 3. Control information, data information, and feedback information

(1) The control information includes SCI, a medium access control control element (medium access control control element, MAC CE), radio resource control (radio resource control, RRC), proximity-based services communication-5 (proximity-based services communication, PC-5) RRC, and the like. In an NR system, the SCI may be first-order SCI and/or second-order SCI. The first-order SCI may also be denoted as SCI-1, and the second-order SCI may also be denoted as SCI-2. The first-order SCI is carried on a PSCCH, the second-order SCI and/or the MAC CE are/is carried on a PSSCH, and the RRC and the PC-5 RRC are carried on a PSSCH. For ease of description, provided that no ambiguity is caused, all the SCI mentioned in this application is the first-order SCI and/or the second-order SCI.
(2) The data information is carried on a PSSCH. The data may also be referred to as SL data or a MAC service data unit (MAC service data unit, MAC SDU). In this application, provided that no ambiguity is caused, the data and the PSSCH may represent a same meaning.
(3) The feedback information is carried on a PSFCH.

### 4. Resource pool

NR SL communication is performed based on the resource pool (resource pool). The resource pool is a time-frequency resource dedicated to SL communication. Frequency domain resources included in the resource pool are consecutive. Time domain resources included in the resource pool may be consecutive or inconsecutive. Different resource pools are distinguished by SL resource pool identifiers (for example, SL-ResourcePoolID). A UE performs receiving in a receiving resource pool and performs sending in a sending resource pool. If resource pools have a same resource pool index, it may be considered that time-frequency resources in the resource pools completely overlap.

In an SL-U communication scenario, because a frequency band is shared by UEs in a plurality of forms, for example, a UE (which is briefly referred to as an SL UE below), a Wi-Fi UE, and a Bluetooth UE in an SL scenario perform transmission on a same frequency band. Therefore, an SL resource pool may also be understood as a set of resources that can be used for SL transmission. In this application, the resource pool may also be referred to as a channel (channel), an operating channel (operating channel), a nominal channel bandwidth (nominal channel bandwidth), or a bandwidth (bandwidth). In other words, in this application, the resource pool, the channel, and the bandwidth may all represent a set of resources that can be used for SL transmission.

A relationship between a resource pool and a channel is as follows: The resource pool includes at least one channel. For example, the resource pool includes one channel, a channel bandwidth is 20 MHz, and a resource pool bandwidth is 20 MHz. For another example, the resource pool includes two channels, a channel bandwidth is 20 MHz, and a resource pool bandwidth is 40 MHz. For another example, the resource pool includes five channels, a channel bandwidth is 20 MHz, and a resource pool bandwidth is 100 MHz.

### 5. Priority

A service priority of a UE is a transmission priority (transmission priority) of the UE. Because the UE may simultaneously send a plurality of services, priorities of the plurality of services may be different.

The service priority may also be referred to as an L1 priority (L 1 priority), a physical layer priority, a priority carried in SCI, a priority corresponding to a PSSCH associated with SCI, a transmission priority, a priority for sending a PSSCH, a priority used for resource selection, a priority of a logical channel, or a highest-level priority of a logical channel.

There is a correspondence between a priority level and a priority value. For example, in some scenarios, a higher priority level corresponds to a lower priority value, or this may be understood as that a lower priority value represents a higher-level priority. For another example, in some scenarios, a lower priority level corresponds to a lower priority value, or this may be understood as that a lower priority value represents a lower-level priority.

For example, a value range of the priority value is, for example, an integer from 0 to 7. When a lower priority value represents a higher-level priority, the priority value 0 represents a highest-level priority. When a lower priority value represents a lower-level priority, the priority value 7 represents a highest-level priority.

For ease of description, provided that no ambiguity is caused, in this application, an example in which a higher priority level corresponds to a lower priority value is used for description.

### 6. Source identifier and destination identifier

A source layer-2 identifier (source layer-2 ID or source L2 ID) has 24 bits. Least significant 8 bits (LSB part (8 bits)) of the source layer-2 identifier are referred to as a source layer-1 identifier, that is, a source ID (source ID) indicated in SCI in NR. Most significant 16 bits (MSB part (16 bits)) are referred to as SRC, and are indicated in a MAC header of a MAC CE. A source identifier in control information may be the source ID indicated in the SCI in NR, the SRC in the MAC header, or the source layer-2 identifier. A destination layer-2 identifier (destination layer-2 ID or destination L2 ID) has 24 bits. Least significant 16 bits (LSB part (16 bits)) of the destination layer-2 identifier are referred to as a destination layer-1 identifier, that is, a destination ID (destination ID) indicated in the SCI in NR. Most significant 8 bits (MSB part (8 bits)) are referred to as DST, and are indicated in the MAC header of the MAC CE. A destination identifier in the control information may be a destination ID indicated in the SCI, the DST in the MAC header, or the destination layer-2 identifier.

In SCI in long term evolution (long term evolution, LTE), there is no source identifier, and there is only a 24-bit source layer-2 identifier, which is indicated in an SRC field in a MAC header. In the SCI in LTE, there is no destination identifier, and there is only a 24-bit destination layer-2 identifier. A DST field in the MAC header indicates the destination layer-2 identifier or most significant 16 bits of the destination layer-2 identifier.

In addition, a destination (destination) in a protocol may also be used in a general sense. For example, for unicast, the destination represents a pair of a source layer-2 identifier and a destination layer-2 identifier; and for broadcast and multicast, the destination represents a destination layer-2 identifier.

### 7. Unlicensed spectrum (unlicensed spectrum)

According to the Regulations on Radio Frequency Allocation of the People's Republic of China, frequency bands are divided to fully, properly, and effectively use radio spectrum resources, ensure normal running of radio services, and prevent mutual interference between various radio services, radio stations, and systems. Technologies such as 2G/3G/4G/5G use licensed spectrums, which need to be applied for by telecom operators before being used, and are characterized by low interference and security.

Technologies such as Wi-Fi, Bluetooth, and ZigBee use unlicensed spectrums, which are intended to serve as supplementary tools for operators to enhance services of the operators. Unlicensed spectrums can be used for communication without application and are free of charge. Communication on an unlicensed spectrum needs to comply with some specifications, for example, listen before talk (listen before talk, LBT) and occupied channel bandwidth (occupied channel bandwidth, OCB) requirements, to ensure fairness in channel access of various types of UEs running on the spectrum. SL communication on an unlicensed spectrum may be referred to as SL-U. A Wi-Fi UE, a Bluetooth UE, and a ZigBee UE may be collectively referred to as an inter-system UE relative to an SL UE.

### 8. LBT or channel access

Listen before talk (listen before talk, LBT) needs to be performed to implement access on an unlicensed spectrum. Performing LBT may also be understood as performing channel access, to be specific, a UE can transmit information on a channel only when determining that the channel is idle in a period of time. LBT includes type 1 (type 1) LBT and type 2 (type 2) LBT. The type 1 LBT is backoff-based LBT, and a backoff time is related to a CAPC, and access can be performed only when a channel is idle for a long time. A frequency domain unit for performing channel access is a channel.

The following separately describes the two types of LBT.

### Type 1 channel access (type 1 channel access or type 1 SL channel access):

The type 1 channel access may also be referred to as the type 1 LBT, and includes two parts: channel sensing with a length of T_{d} (defer duration) and cyclic sensing.

Channel sensing with a length of T_{d} includes one T_{f}=16 µs and subsequent mₚ consecutive Tₛₗ=9 µs, that is, T_{d}=T_{f}+mₚ×Tₛₗ. A sensing time of T_{f} is 9 µs at the beginning, and when all sensing times of T_{d} are idle, go to cyclic sensing. For a value of mₚ, refer to Table 1 or Table 2, where *CW_{min,p}*≤*CWₚ≤CW_{max,p},* where *CWₚ* is a contention window (contention window), and *T_{cot,p}* is a maximum length of a COT.

Cyclic sensing is a cyclic process based on a counter N, and includes the following steps:
Step 1: Set N=Nᵢₙᵢₜ, where Nᵢₙᵢₜ is a random number whose value ranges from 0 to *CWₚ.* Then, go to step 4.
Step 2: If N>0, a UE decreases a counter value, and sets N=N-1.
Step 3: Sense a channel (sense the channel) in a sensing slot (an additional sensing slot duration), and if a sensing result is "idle" (idle), go to step 4; or if the sensing result is not "idle", go to step 5.
Step 4: If N=0, stop; or if N≠0, go to step 2.
Step 5: Sense the channel until it is sensed that a sensing slot (sensing slot) in Td is busy (busy), or until all sensing slots in Td are idle.
Step 6: If all the sensing slots in Td are idle, go to step 4; or if not all the sensing slots in Td are idle, go to step 5.

It should be understood that, in this application, the counter N may also be referred to as an LBT counter N.

For example, Table 1 and Table 2 show parameter values related to channel access.

**Table 1**

| CAPC | mₚ | *CW_{min,p}* | *CW_{max,p}* | *T_{cot,p}* | Allowed *CWₚ* sizes (allowed *CWₚ* sizes) |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 ms or 10 ms | {15, 31, 63} |
| 4 | 7 | 15 | 1023 | 8 ms or 10 ms | {15, 31, 63, 127, 255, 511, 1023} |

**Table 2**

| CAPC | mₚ | *CW_{min,p}* | *CW_{max,p}* | *T_{cot,p}* | Allowed *CWₚ* sizes (allowed *CWₚ* sizes) |
|---|---|---|---|---|---|
| 1 | 2 | 3 | 7 | 2ms | {3, 7} |
| 2 | 2 | 7 | 15 | 4 ms | {7, 15} |
| 3 | 3 | 15 | 1023 | 6 ms or 10 ms | {15,31,63, 127, 255, 511, 1023} |
| 4 | 7 | 15 | 1023 | 6 ms or 10 ms | {15,31,63, 127, 255, 511, 1023} |

### Type 2 channel access (type 2 channel access or type 2 SL channel access)

The type 2 channel access includes three types: a type 2A, a type 2B, and a type 2C. The type 2 LBT requires a channel to be idle for only a relatively short time (for example, 16 µs or 25 µs), so that a UE can access the channel. The type 2 LBT is mainly used during COT sharing, and has a corresponding execution condition. For example, a UE initiating a COT and a UE sharing the COT mainly have a receiving-sending relationship.

The following separately describes the foregoing type 2A, type 2B, and type 2C.

Type 2A channel access: A UE immediately performs transmission after sensing that a channel is idle in at least a sensing interval *Tₛₕₒᵣₜ*=25 µs. Specifically, *Tₛₕₒᵣₜ*=25 µs includes one sensing slot with T_{f}=16 µs and one sensing slot with Tsl=9 µs. If the two sensing slots are both idle, it is considered that the channel is idle.

Type 2B channel access: A UE immediately performs transmission after sensing that a channel is idle in T_{f}=16 µs. Specifically, channel sensing occurs in last 9 µs of T_{f}, and a channel sensing time is not less than 5 µs. If it is sensed that the channel is idle for more than 4 µs, it is considered that the channel is idle.

Type 2C channel access: A UE can perform transmission without performing channel sensing, where a maximum transmission time is 584 µs.

### 9. Channel occupancy (channel occupancy, CO) and channel occupancy time (channel occupancy time, COT)

A channel is a carrier or a part of a carrier including a set of consecutive resource blocks (RBs) on which a channel access process is performed on an unlicensed spectrum. This may be understood as that the channel is a bandwidth used by a UE to perform channel access.

The channel may also be referred to as an RB set (RB set).

Channel occupation is transmission performed by a UE on one or more channels after the UE performs a channel access process.

After performing type 1 channel access, the UE occupies a channel in a continuous period of time to transmit information, and this is referred to as the channel occupancy time. A frequency domain unit of the COT is a channel, and a time domain unit of the COT is ms or a slot. In this application, the COT may be a time concept, that is, a time for SL transmission, or may be a resource concept, that is, a time-frequency resource occupied by SL transmission. In this application, if no further differentiation is made, the COT and CO may be a same concept.

It should be understood that a UE may transmit information on a plurality of adjacent or non-adjacent channels. In this application, that a UE transmits information on a plurality of channels may be understood as follows: The UE occupies one COT to transmit the information, and the COT occupies a plurality of channels in frequency domain; or the UE occupies a plurality of COTs to transmit the information, and each COT occupies one channel in frequency domain.

The COT may be shared (COT sharing) for information transmission between UEs. A UE initiating a COT may share the COT with another UE, to be specific, used for SL transmission of the another UE. The UE initiating the COT and the UE sharing the COT occupy a channel in a continuous period of time to perform transmission. COT sharing needs to meet a corresponding condition. For example, the UE initiating the COT is a receiving UE or a sending UE of the UE sharing the COT. For another example, the UE initiating the COT and the UE sharing the COT are members in a same group.

A time for a UE to transmit information cannot exceed a limit of a maximum channel occupancy time (maximum channel occupancy time, MCOT), which is denoted as *T_{cot,p}*. For different CAPCs, values of *T_{cot,p}* are different, as shown in Table 1 and Table 2. For a case in which one UE accesses a channel and transmits information in a COT, a transmission time does not exceed the maximum channel occupancy time *T_{cot,p}*. For a case in which a plurality of UEs transmit information in a COT, transmission times of a UE initiating a COT and a UE sharing the COT do not exceed the maximum channel occupancy time *T_{cot,p},* where *p* is a CAPC of the UE initiating the COT, or *p* is a CAPC with a smallest CAPC value in a UE that performs transmission in the COT.

### 10 ID

In this application, the ID may also be referred to as an identifier, a sequence, a number, or an index.

In an SL communication scenario of R16, manners of determining, for a UE, a resource used to transmit SL information include Manner 1 (mode 1) and Manner 2 (mode 2). In Manner 1, a resource used by the UE to transmit the SL information may be scheduled by a base station. In Manner 2, a base station may configure a resource pool, so that the UE can select, through resource sensing and resource selection, a resource that can be used to transmit the SL information. A method for performing resource sensing and resource selection by the UE may include the following steps:
Step 1: The UE decodes a PSCCH and measures a PSRP value to sense a resource in a resource sensing window or perform resource sensing.
Step 2: The UE determines, based on a resource sensing result in the resource sensing window through comparison with a reference signal received power (reference signal received power, RSRP) threshold and an RSRP measurement value, whether to exclude a resource from the resource selection window, to form a candidate resource set.

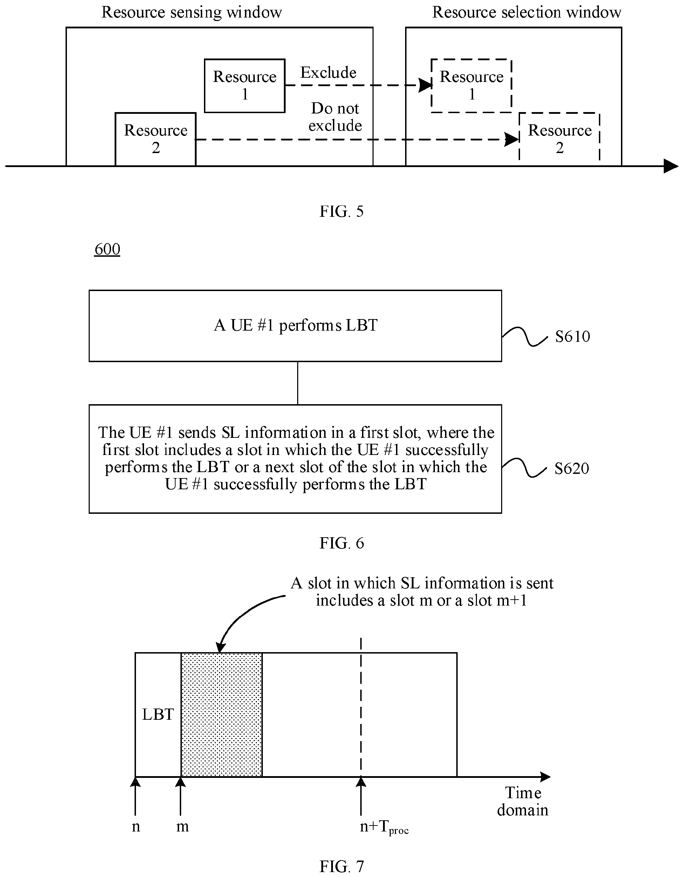

FIG. 5 is a diagram of an example of a method in which a UE excludes a resource from a resource selection window based on a sensing result.

For example, if an RSRP measurement value of a resource 1 in the resource sensing window is greater than an RSRP threshold, a resource that falls into the resource selection window and that is in a reserved resource indicated by SCI in the resource 1 is excluded. For another example, if an RSRP measurement value of a resource 2 in the resource sensing window is less than an RSRP threshold, a resource that falls into the resource selection window and that is in a reserved resource indicated by SCI in the resource 2 is not excluded. The RSRP threshold is related to a service priority indicated by the SCI and a service priority of the UE.

The reserved resource may be understood as a resource that is prespecified for a specific UE (for example, a UE #1) or occupied by the UE and that is used by the UE (for example, the UE #1) to subsequently send information, so that another UE (for example, a UE #2) can exclude the reserved resource from a resource selection window of the UE (for example, the UE #2) based on a resource sensing result.

Step 3: The UE selects, from the candidate resource set, a resource that can be used to transmit the SL information, where the SL information transmitted by the UE includes initially transmitted information and several pieces of retransmitted information.

Step 4: When a specific condition is met, for example, a reserved resource of the UE overlaps a reserved resource of another UE or a counter is re-selected, the UE triggers resource re-selection. Counter re-selection may also be understood as that the UE re-evaluates whether a resource in the candidate resource set is available, and if the resource is unavailable, the UE triggers resource re-selection.

In an SL-U communication scenario, an LBT requirement needs to be complied with, in other words, channel access needs to be performed, to ensure fairness in channel access of various types of UEs. However, in a current SL communication scenario of R16, a resource that can be used to transmit the SL information is selected based only on a resource sensing result, and LBT is not performed, in other words, channel access is not performed. Therefore, the resource selection method in the SL communication scenario is not applicable to the SL-U communication scenario.

Therefore, for the SL-U communication scenario, this application provides a resource selection method and apparatus. In the method, a terminal device sends SL information after LBT succeeds. This helps ensure fairness in channel access of various types of UEs.

A time unit may be, for example, a symbol, a slot, a mini-slot, a partial slot, a subframe, a radio frame, a sensing slot, or the like. This is not limited in this application.

To facilitate understanding of embodiments of this application, an example in which the time unit is a slot is used below for example description.

The resource selection method provided in embodiments of this application is described below in detail with reference to the accompanying drawings. The resource selection method provided in embodiments of this application may be applied to the communication systems shown in FIG. 1 and FIG. 2.

FIG. 6 is a diagram of an example of a resource selection method according to an embodiment of this application. The method 600 may include S610 and S620.

S610: A UE #1 performs LBT.

In this embodiment, the UE #1 (that is, an example of a first terminal device) may perform LBT or channel access starting from a slot n, for example, perform type 1 LBT. Further, the UE #1 may select, based on an LBT result, a resource used to send SL information.

Optionally, the UE #1 may start to perform LBT based on a CAPC. For parameter values such as the CAPC related to channel access, refer to the foregoing Table 1 and Table 2.

Optionally, starting from the slot n, the UE #1 may further select, based on a sensing result, a resource that can be used to transmit the SL information, or select a resource based on a sensing result. That the UE #1 selects a resource based on a sensing result may also be understood as that the UE #1 considers a reserved resource of another UE in a resource selection process, or may also be understood as that the UE #1 excludes a reserved resource of another UE from a candidate resource set of the UE #1 in a resource selection process.

It may be understood that, if the UE #1 considers the sensing result when selecting a resource, in other words, considers a reserved resource of another UE, the resource that is selected by the UE #1 based on the sensing result and that can be used to transmit the SL information may not include the reserved resource of the another UE, in other words, the resource that is selected by the UE #1 based on the sensing result and that can be used to transmit the SL information does not belong to the reserved resource of the another UE.

The SL information may include at least one of a PSCCH, a PSSCH, and a PSFCH. A transmission structure of the SL information may be, for example, the transmission structure shown in FIG. 3 or FIG. 4. The PSCCH may be used to carry control information, the PSSCH may be used to carry control information and/or data, and the PSFCH may be used to carry feedback information. Therefore, that the SL information includes at least one of the PSCCH, the PSSCH, and the PSFCH may also be understood as that the SL information includes at least one of SL data information, SL control information, and SL feedback information.

In this embodiment, the slot n may be further used to represent any one of the following moments: a moment for triggering resource selection, a moment for determining a transmission parameter, a moment for determining that there is data to be sent, a moment at which a packet arrives at a physical layer, a moment at which a packet arrives at a MAC layer, and a moment for starting to perform channel access.

The transmission parameter may include, for example, one or more of the following parameters: a physical layer priority (L 1 priority), a channel access priority class (channel access priority class, CAPC), a quantity of subchannels, a quantity of interlacings, and a periodicity.

For ease of description, a time (duration) from a moment at which the UE #1 selects a resource based on the sensing result starting from the slot n to a moment at which the UE #1 selects a resource that can be used to transmit the SL information, in other words, a time in which the UE #1 selects, based on the sensing result, a resource that can be used to transmit the SL information may be denoted as T_{proc}.

In this embodiment, T_{proc} may also be understood as: a time for selecting a resource based on the sensing result, a time for selecting, based on the transmission parameter, a resource that can be used to transmit the SL information, a processing time for selecting a resource that can be used for SL transmission, a time for selecting, based on the sensing result, a resource that can be used for SL transmission, a time for processing the sensing result, or a time for processing the sensing result based on the transmission parameter.

Correspondingly, a slot n+T_{proc} may be understood as: a slot in which a resource that can be used to transmit the SL information is selected, a slot in which a resource that can be used to transmit the SL information is selected based on the transmission parameter, a slot in which an SL resource is selected, a slot in which a resource that can be used for SL transmission is selected, a slot in which a resource that can be used for SL transmission is selected based on the sensing result, a slot in which processing of the sensing result is completed, or a slot in which processing of the sensing result is completed based on the transmission parameter.

Optionally, T_{proc} may be predefined, or may be indicated by a network device. This is not limited in this application.

Optionally, the time T_{proc} for selecting a resource based on the sensing result may include any one of the following times, or a sum of at least two of the following times: a time for preparing the sensing result, a time for reporting the sensing result to the MAC layer, a time for the MAC layer to select a resource or create a grant (selected sidelink grant), a time for the MAC layer to indicate a resource to the physical layer, a time for conversion between receiving and sending, and a data preparation time. The data preparation time includes any one of the following times, or a sum of at least two of the following times: a channel encoding time, a modulation time, an RE mapping time, an OFDM signal generation time, and a packet assembly time.

In a possible implementation, a value of T_{proc} is related to a subcarrier spacing (subcarrier spacing, SCS). In NR, a subcarrier spacing of NR may be 2^{µ} . 15 kHz.

For example, Table 3 and Table 4 show a correspondence between a value of µ, an SCS, and a value of T_{proc}. T_{proc} is any one of a T_{proc} optional value 1, a T_{proc} optional value 2, or a T_{proc} optional value 3. A unit of T_{proc} in Table 3 is a slot, and a unit of T_{proc} in Table 4 is millisecond (ms).

**Table 3**

| µ | SCS | T_{proc} optional value 1 (unit: slot) | T_{proc} optional value 2 (unit: slot) | T_{proc} optional value 3 (unit: slot) |
|---|---|---|---|---|
| 0 | 15 | 1 | 3 | 4 |
| 1 | 30 | 1 | 5 | 6 |
| 2 | 60 | 2 | 9 | 11 |
| 3 | 120 | 4 | 17 | 21 |

**Table 4**

| µ | SCS | T_{proc} optional value 1 (unit: ms) | T_{proc} optional value 2 (unit: ms) | T_{proc} optional value 3 (unit: ms) |
|---|---|---|---|---|
| 0 | 15 | 1 | 3 | 4 |
| 1 | 30 | 0.5 | 2.5 | 3 |
| 2 | 60 | 0.5 | 2.25 | 2.75 |
| 3 | 120 | 0.5 | 2.125 | 2.625 |

In another possible implementation, a value of T_{proc} may alternatively be a sum of A milliseconds and a time corresponding to B slots. Values of A and B may be determined based on a transmission capability of the UE.

S620: The UE #1 sends the SL information in a first slot. The first slot includes a slot in which the UE #1 successfully performs the LBT or a next slot of the slot in which the UE #1 successfully performs the LBT.

The slot in which the LBT succeeds may also be understood as a slot in which an LBT counter N is equal to 0.

For example, it is assumed that the UE #1 performs the LBT in a slot 1, a slot 2, a slot 3, and a slot 4, and the UE #1 successfully performs the LBT in the slot 2, in other words, the LBT counter N is equal to 0 in the slot 2. In this case, the slot in which the LBT succeeds is the slot 2, in other words, the slot 2 is the slot in which the LBT succeeds.

In S620, the UE #1 may select, based on a result of performing the LBT, a resource for sending the SL information. Specifically, if the LBT succeeds, the UE #1 may send the SL information in the first slot. The first slot includes the slot in which the LBT succeeds or the next slot of the slot in which the LBT succeeds.

Because a time in which the UE #1 performs the LBT may be different from a time in which the UE #1 selects a resource based on the sensing result, it is possible that when the LBT succeeds, a resource that can be used to transmit the SL information has not selected based on the sensing result. If the UE #1 does not send the SL information when the LBT succeeds, in other words, does not access a channel, another UE may access the channel. Consequently, the LBT fails when the UE #1 selects, based on the sensing result, a resource that can be used to transmit the SL information. Therefore, in a possible implementation of this embodiment, regardless of whether the UE #1 selects, based on the sensing result, a resource that can be used to transmit the SL information, the UE #1 immediately accesses a channel and sends the SL information after the LBT succeeds, in other words, sends the SL information in the slot in which the UE #1 successfully performs the LBT or in the next slot of the slot in which the UE #1 successfully performs the LBT. Therefore, fairness in channel access of various types of UEs can be ensured.

In a possible case, the slot in which the LBT succeeds can be used to send the SL information. For example, if a moment at which the LBT succeeds is at a start location of the slot, the first slot includes the slot in which the LBT succeeds.

In another possible case, the slot in which the LBT succeeds cannot be used to send the SL information. For example, if a moment at which the LBT succeeds is in a middle location of the slot, and the slot after the location is insufficient for sending the SL information, the first slot includes the next slot of the slot in which the LBT succeeds.

It should be noted that a sensing slot (sensing slot) of the LBT is a time unit of 9 µs. If the LBT succeeds in one sensing slot, the UE #1 accesses a channel in a next sensing slot.

That the UE #1 sends the SL information in the first slot may include the following several cases:
Case 1: The first slot does not belong to the candidate resource set of the UE #1. In this case, the UE #1 still sends the SL information in the first slot. In other words, regardless of whether the resource belongs to the candidate resource set of the UE #1, the UE #1 sends the SL information in the first slot. That the first slot does not belong to the candidate resource set of the UE #1 may also be understood as that a resource that the first slot is in does not belong to the candidate resource set of the UE #1.

Descriptions of the candidate resource set are described below.

Case 2: When the LBT succeeds, the UE #1 has not selected, based on the sensing result, a resource that can be used to transmit the SL information, in other words, the first slot is earlier than the slot n+T_{proc}. In this case, the UE #1 still sends the SL information in the first slot. In other words, regardless of whether the first slot is earlier or later than the slot n+T_{proc}, the UE #1 sends the SL information in the first slot.

FIG. 7 is a diagram of an example of Case 2.

As shown in FIG. 7, the UE #1 performs the LBT starting from the slot n, and starts to select, based on the sensing result, a resource that can be used to transmit the SL information. In addition, if the UE #1 successfully performs the LBT in a slot m, and selects, in the slot n+T_{proc} based on the sensing result, a resource that can be used to transmit the SL information, a slot in which the UE #1 sends the SL information includes the slot m or a slot m+1. In other words, the slot in which the UE #1 sends the SL information is the first slot.

Case 3: If the slot in which the UE #1 successfully performs the LBT is earlier than the slot n+T_{proc}, and a time interval between the slot in which the UE #1 successfully performs the LBT and the slot n+T_{proc} is less than a time interval T, the UE #1 sends the SL information in the first slot.

In this case, if the time interval between the slot in which the UE #1 successfully performs the LBT and the slot n+T_{proc} is less than the time interval T, it may be considered that the UE #1 can quickly send, in the slot n+T_{proc} or after the slot n+T_{proc}, the SL information on a resource determined based on the sensing result. To be specific, before a slot that the resource is in, although the first slot does not belong to the resource determined based on the sensing result, another UE in a resource pool is not severely affected even if the SL information of the UE #1 is transmitted in one or two slots. Therefore, the UE #1 immediately sends the sidelink information after successfully performing the LBT.

The time interval T is related to a physical layer priority and/or a CAPC of the UE #1. For example, a smaller value of the physical layer priority and/or a smaller value of the CAPC indicate/indicates a larger time interval T.

For Case 3, in an example, when a physical layer priority value and/or a CAPC value are/is less than a first priority value, the UE #1 sends the SL information in the first slot. In another example, when a physical layer priority level and/or a CAPC level are/is higher than a first priority level, the UE #1 sends the SL information in the first slot.

The first priority value and the first priority level may be predefined in a protocol, may be generated according to a predefined rule, may be preconfigured, or may be dynamically configured. This is not limited.

Case 4: If the slot in which the UE #1 successfully performs the LBT is earlier than the slot n+T_{proc}, and a time interval between the slot in which the UE #1 successfully performs the LBT and the slot n+T_{proc} is greater than a time interval T', the UE #1 sends the SL information in the first slot.

In this case, if the time interval between the slot in which the UE #1 successfully performs the LBT and the slot n+T_{proc} is greater than the time interval T', it may be considered that a channel status may change greatly in the slot n+T_{proc}. Therefore, the UE #1 immediately sends the sidelink information after successfully performing the LBT, to avoid a case in which the first terminal device cannot access a channel due to an LBT failure caused by a channel status change.

The time interval T' may be predefined, or may be indicated by a network device. This is not limited in this application.

The time interval T' is related to a physical layer priority and/or a CAPC of the UE #1. For example, a smaller value of the physical layer priority and/or a smaller value the CAPC indicate/indicates a larger time interval T'.

For Case 4, in an example, when a physical layer priority value and/or a CAPC value are/is less than a first priority value, the UE #1 sends the SL information in the first slot. In another example, when a physical layer priority level and/or a CAPC level are/is higher than a first priority level, the UE #1 sends the SL information in the first slot.

The first priority value and the first priority level may be predefined in a protocol, may be generated according to a predefined rule, may be preconfigured, or may be dynamically configured. This is not limited.

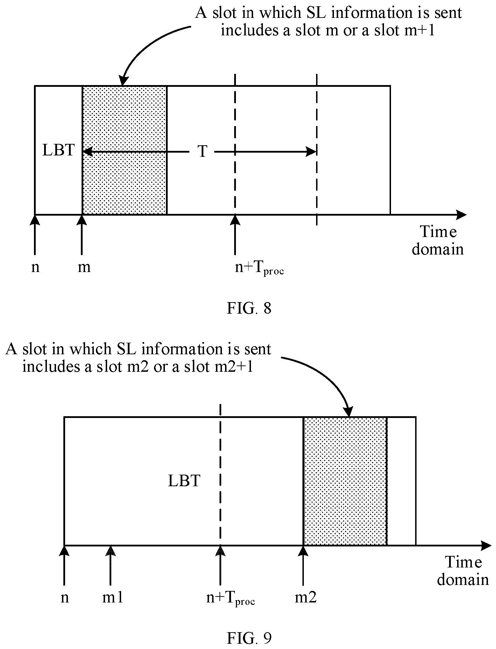

FIG. 8 is a diagram of an example of Case 3. As shown in FIG. 8, the UE #1 performs the LBT starting from the slot n, and starts to select, based on the sensing result, a resource that can be used to transmit the SL information. Then, the UE #1 successfully performs the LBT in a slot m, and selects, in the slot n+T_{proc} based on the sensing result, a resource that can be used to transmit the SL information. In addition, a time interval between the slot m and the slot n+T_{proc} is less than the time interval T. In this case, a slot in which the UE #1 sends the SL information may be the slot m or a slot m+1. In other words, the slot in which the UE #1 sends the SL information is the first slot.

Optionally, the first slot is after a second moment, and the second moment is a moment at which the first terminal device completes packet assembly.

In a possible implementation, that the UE #1 sends the SL information in the first slot includes: The UE #1 sends the SL information in the first slot and at least one slot after the first slot.

In this implementation, because the SL information may be sent in more than one slot, for example, the slot in which the SL information is sent includes M slots, the UE #1 may send M pieces of SL information after the LBT succeeds. In other words, the UE #1 may send M PSCCHs and/or PSSCHs after the LBT succeeds, and optionally, may send M PSFCHs. The last (M-1) pieces of SL information are repetition (repetition) or retransmission (retransmission) of the 1^{st} piece of SL information. In other words, the M pieces of SL information may include initially transmitted information and at least one piece of retransmitted information. M is an integer greater than or equal to 1.

In an example, the 1^{st} slot in the M slots may be the slot in which the LBT succeeds, and a last slot in the M slots may be the slot n+T_{proc}.

In another example, the 1^{st} slot in the M slots may be the slot in which the LBT succeeds, and a last slot in the M slots may be a slot n+T_{proc}+1.

In another example, the 1^{st} slot in the M slots may be the next slot of the slot in which the LBT succeeds, and a last slot in the M slots may be the slot n+T_{proc}.

In another example, the 1^{st} slot in the M slots may be the next slot of the slot in which the LBT succeeds, and a last slot in the M slots may be a slot n+T_{proc}+1.

According to the method in this embodiment, regardless of whether the UE #1 selects, based on the sensing result, a resource that can be used to transmit the SL information, the UE #1 immediately accesses a channel and sends the SL information after the LBT succeeds, in other words, sends the SL information in the slot in which the UE #1 successfully performs the LBT or in the next slot of the slot in which the LBT succeeds. Therefore, fairness in channel access of various types of UEs can be ensured.

However, in a possible case, the slot in which the UE #1 successfully performs the LBT or the next slot of the slot in which the LBT succeeds may be a reserved resource of another UE (for example, the UE #2). In other words, if the UE #1 sends the SL information on the resource, the another UE may be unable to send the SL information on the reserved resource. Particularly, when the another UE has a higher physical layer priority level, the UE with a higher priority level may be unable to preferentially use a transmission resource, which reduces reliability of sending the SL information by the another UE, and increases a delay of the another UE.

In view of this, in another possible implementation of this embodiment, the UE #1 may select, based on the sensing result, a resource that can be used to transmit the SL information. If the LBT is successfully performed in a slot that the resource is in, or if the LBT is successfully performed in a previous slot of the slot that the resource is in, the UE #1 accesses a channel and sends the SL information on the resource. In this way, a resource collision between the first slot and a reserved resource of another UE can be avoided, in other words, the first slot does not belong to the reserved resource of the another UE.

In other words, if the UE #1 successfully performs the LBT, and the UE #1 has selected, based on the sensing result, a resource that can be used to transmit the SL information, the UE #1 may access a channel and send the SL information in the first slot, where the resource that can be used to transmit the SL information includes the first slot. If the UE #1 successfully performs the LBT, but the UE #1 has not selected, based on the sensing result, a resource that can be used to transmit the SL information, the UE #1 does not access a channel.

A slot in which the UE #1 starts to perform channel access is before a slot in which the UE #1 selects a resource that can be used to transmit the SL information, in other words, is before the slot n+T_{proc}.

In a possible implementation, a slot that the LBT counter N is equal to N0 (for example, N0=1) is in is before the slot n+T_{proc} in time domain. In this case, the UE #1 may keep the LBT counter N equal to N0 until N1 (for example, N1=1) sensing slots (sensing slots) before the slot n+T_{proc}, and then continue to perform a channel access process.

In a possible case, when the LBT succeeds, the UE #1 has not selected, based on the sensing result, a resource that can be used to transmit the SL information. In other words, the UE #1 cannot determine whether the first slot is a resource that can be used to transmit the SL information. In this case, to avoid a resource collision between the first slot and a reserved resource of another UE, in an optional implementation, even if the LBT succeeds, the UE #1 does not access a channel, but waits until the slot n+T_{proc}. If the LBT succeeds again, and the UE #1 can determine, based on the sensing result, that the first slot in which the LBT succeeds again is a resource that can be used to transmit the SL information, the UE #1 may immediately access the channel and send the SL information after the LBT succeeds again. The first slot in which the LBT succeeds again includes a slot in which the LBT succeeds again or a next slot of the slot in which the LBT succeeds again.

It should be understood that, before the UE #1 accesses a channel and sends the SL information, the UE #1 may successfully perform the LBT a plurality of times. The UE #1 may access the channel and send the SL information when successfully performing the LBT for a last time. For example, when the UE #1 successfully performs the LBT for the last time, or before the UE #1 successfully performs the LBT for the last time, the UE #1 selects, based on the sensing result, a resource that can be used to transmit the SL information. In this case, the UE #1 may access the channel and send the SL information.

FIG. 9 is a diagram of an example in which a UE #1 sends SL information in a first slot in which LBT succeeds again.

A slot m1 in which the LBT succeeds for the first time is before the slot n+T_{proc}, and a slot m2 in which the LBT succeeds for the second time is after the slot n+T_{proc}. Therefore, the UE #1 may determine, based on the sensing result, whether the first slot in which the LBT succeeds for the second time is a resource that can be used to transmit the SL information. If the first slot in which the LBT succeeds for the second time is a resource that can be used to transmit the SL information, the UE #1 may send the SL information in the first slot in which the LBT succeeds for the second time. In other words, the UE #1 may send the SL information in the slot m2 or a slot m2+1, or the UE #1 may access a channel when the LBT succeeds for the second time.

For the foregoing case, in another optional manner, the UE #1 does not perform the LBT before the slot n+T_{proc}, and does not start to perform the LBT until the slot n+T_{proc}. Therefore, the UE #1 may first select, based on the sensing result, a resource that can be used to transmit the SL information. If the LBT succeeds, and the first slot is a resource that is selected by the UE #1 and that can be used to transmit the SL information, the UE #1 may access a channel and send the SL information in the first slot.

Optionally, when the UE #1 has started to perform the LBT before the slot n+T_{proc}, the UE #1 may suspend execution of the LBT, and does not continue to perform the LBT until the slot n+T_{proc}. For example, before the slot n+T_{proc}, if the LBT counter N is equal to A (A is an integer greater than or equal to 1), the UE #1 may keep N equal to A, and the UE #1 does not enable the LBT counter to continue to perform counting until the slot n+T_{proc}.

According to the method in this embodiment, when selecting a resource for sending the SL information, the UE #1 not only considers whether the LBT succeeds, but also considers whether a slot for sending the SL information is a resource that is selected by the UE #1 based on the sensing result and that can be used to transmit the SL information. Therefore, a resource collision between UEs can be avoided, thereby ensuring reliability of SL information transmission. In addition, the UE #1 sends the SL information after the LBT succeeds, so that fairness in channel access of various types of UEs can be ensured.

Optionally, the method 600 further includes: The UE #1 excludes a resource from a candidate resource set based on the sensing result. The candidate resource set is the candidate resource set of the UE #1.

That the UE #1 excludes a resource from a candidate resource set based on the sensing result may also be understood as that the UE #1 excludes a reserved resource of another UE from the candidate resource set based on the sensing result, to avoid a resource collision.

The candidate resource set is a set of resources in the resource selection window. A start location of the resource selection window may be determined based on at least one of the following parameters: a physical layer priority, a CAPC, a contention window *CWₚ* (Contention window), and an initial value (Nᵢₙᵢₜ) of an LBT counter.

Optionally, based on the following parameters, the start location of the resource selection window may be determined as n+T_{f}+mₚ×Tₛₗ+Nᵢₙᵢₜ×Tₛₗ, n+min{T_{f}+mₚ×Tₛₗ+Nᵢₙᵢₜ×Tₛₗ, T_{proc}}, or n+max{T_{f}+mₚ×Tₛₗ+Nᵢₙᵢₜ×Tₛₗ, T_{proc}}, where n represents the slot n. For values of parameters T_{f}, mₚ, and Tₛₗ, refer to the foregoing descriptions. Optionally, Nᵢₙᵢₜ may be a preset value, or may be a random number whose value ranges from 0 to *CWₚ.*

Optionally, the start location of the resource selection window may be related to the slot in which the LBT counter N is equal to 0, in other words, the start location of the resource selection window is related to the slot in which the LBT succeeds. For example, the start location of the resource selection window is a slot that is after T_{proc} after the slot in which the LBT counter N is equal to 0, in other words, the start location of the resource selection window is a slot that is after T_{proc} after the slot in which the LBT succeeds.

Optionally, the start location of the resource selection window may alternatively be related to a slot in which the LBT counter N is equal to N2. N2 is an integer, and is, for example, a preconfigured value or a value configured by a network. For example, the start location of the resource selection window is a slot that is after T_{proc} after the slot in which the LBT counter N is equal to N2.

In this embodiment, the UE #1 may exclude a reserved resource of another UE from the candidate resource set based on the sensing result in a plurality of implementations. Descriptions are provided below in two cases.

In a first case, the UE #1 only considers whether the LBT succeeds, and needs to immediately access a channel and send the SL information after the LBT succeeds. In this case, a manner in which the UE #1 excludes a reserved resource of another UE from the candidate resource set based on the sensing result may be, for example, as follows: The UE #1 excludes, based on the sensing result, a reserved resource that is of the another UE and that is after the first slot; the UE #1 does not exclude the first slot when excluding the reserved resource of the another UE from the candidate resource set based on the sensing result; or the UE #1 selects a resource of the first slot, so that the first slot can be used to transmit the SL information.

In a second case, the UE #1 not only considers whether the LBT succeeds, but also considers the sensing result, to avoid a resource collision between UEs. In this case, a manner in which the UE #1 excludes a reserved resource of another UE from the candidate resource set based on the sensing result may be, for example, excluding, based on the sensing result, a reserved resource that is of the another UE and that is after the slot n+T_{proc}, so that the UE #1 can select, based on the sensing result, a resource that can be used to transmit the SL information.

It should be understood that the foregoing manner in which the UE #1 excludes a reserved resource of another UE from the candidate resource set based on the sensing result is an example. In actual application, the reserved resource of the another UE may alternatively be excluded from the candidate resource set in another manner. This is not limited in this application.

For ease of description, in the following, an implementation in which only whether the LBT succeeds is considered during resource selection is denoted as Manner 1, and an implementation in which both an LBT result and a sensing result are considered is denoted as Manner 2. In Manner 1, regardless of whether the UE #1 selects, based on the sensing result, a resource that can be used to transmit the SL information, the UE #1 immediately sends the SL information after the LBT succeeds. In Manner 2, after selecting, based on the sensing result, a resource that can be used to transmit the SL information, the UE #1 sends the SL information on the resource if the LBT succeeds.

For Manner 1, because the UE #1 may immediately send the SL information after the LBT succeeds for the first time, it is helpful to reduce a delay of sending the SL information by the UE #1.

Optionally, in this embodiment, Manner 1 or Manner 2 may be enabled through resource pool level (pre)configuration or network configuration, in other words, it may be determined, through resource pool level (pre)configuration or network configuration, to use Manner 1 or Manner 2 to select a resource used to transmit the SL information.

In a possible implementation, Manner 1 may be used by default, and Manner 2 is used if Manner 2 is enabled through resource pool level (pre)configuration or network configuration.

In another possible implementation, Manner 2 may be used by default, and Manner 1 is used if Manner 1 is enabled through resource pool level (pre)configuration or network configuration.

According to the method in this embodiment, the UE #1 may immediately send the SL information after the LBT succeeds. Therefore, fairness in channel access of various types of UEs can be ensured, and a delay of sending the SL information by the UE #1 can be reduced.

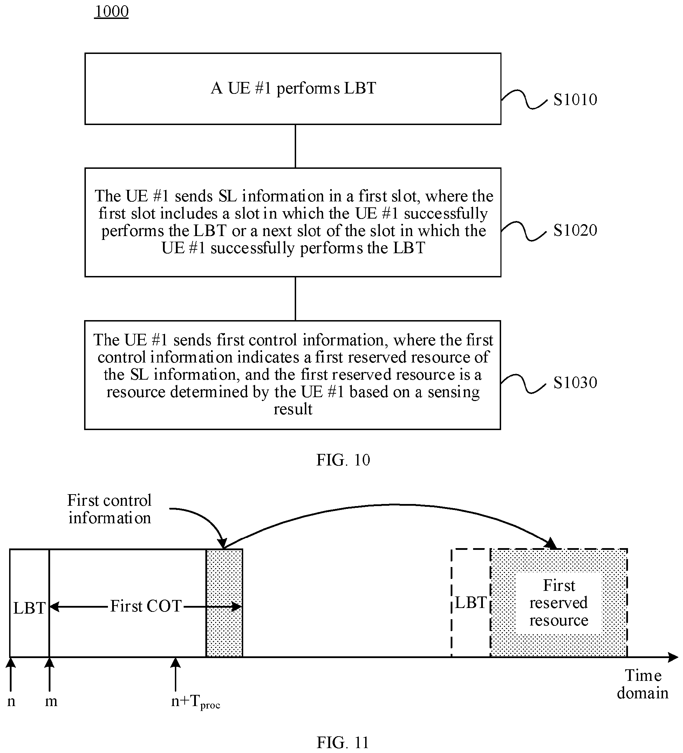

FIG. 10 is a diagram of another example of a resource selection method according to an embodiment of this application. The method 1000 may include S1010 to S1030.

S1010: A UE #1 performs LBT.

S1020: The UE #1 sends SL information in a first slot. The first slot includes a slot in which the UE #1 successfully performs the LBT or a next slot of the slot in which the UE #1 successfully performs the LBT.

S1010 and S1020 are the same as S610 and S620 in the foregoing method embodiment. To avoid repetition, details are not described herein again.

To facilitate understanding of this embodiment, an example in which a slot in which the LBT succeeds is before a slot n+T_{proc} and a channel is immediately accessed and the SL information is immediately sent after the LBT succeeds is mainly used below for example description. In other words, unless otherwise specially stated, in this embodiment, a slot in which the UE #1 sends the SL information is before the slot n+T_{proc}, in other words, when sending the SL information, the UE #1 has not selected, based on a sensing result, a resource that can be used to transmit the SL information.

S1030: The UE #1 sends first control information, where the first control information indicates a first reserved resource of the SL information. The first reserved resource is a resource determined by the UE #1 based on a sensing result.

It should be understood that the SL information herein is the SL information sent by the UE #1 in the first slot in S1020.

In this embodiment, the UE #1 may send the first control information in a second slot, where the second slot is after the slot n+T_{proc}. Therefore, the UE #1 may send the first control information to indicate the first reserved resource of the UE #1 to another UE.

It may be understood that, because the first control information is sent after the slot n+T_{proc}, that is, when sending the first control information, the UE #1 has selected, based on the sensing result, a resource that can be used to send the SL information, the first control information may indicate a reserved resource that is based on the sensing result. In other words, the first reserved resource is a resource determined based on the sensing result.

That the first reserved resource is a resource determined based on the sensing result may alternatively be understood as that the first reserved resource does not include a reserved resource of another UE, or may be understood as that the first reserved resource belongs to a resource remaining after a first terminal device excludes a reserved resource of another terminal device. That the first control information indicates the reserved resource that is based on the sensing result may also be understood as that when indicating the reserved resource of the SL information of the UE #1 by using the first control information, the UE #1 considers a reserved resource of another UE, thereby avoiding a resource collision between the first reserved resource and the reserved resource of the another UE.

Optionally, a COT that the first reserved resource of the UE #1 is in is after a COT that the first slot is in.

Optionally, the first reserved resource includes a resource reserved by the first terminal device for a to-be-transmitted TB. In other words, the first reserved resource includes a resource reserved by the first terminal device for transmitting a next TB.

Optionally, the first reserved resource of the UE #1 may include at least one of the following resources:
a reserved resource for retransmission, a periodic reserved resource, a periodic reserved resource of the reserved resource for retransmission, a reserved resource in a next COT, a reserved resource in a current COT, and a reserved resource between COTs. The current COT is the COT that the first slot is in. The periodic reserved resource may be understood as a reserved resource of a next TB. Correspondingly, transmission of the next TB may be referred to as periodic transmission of a current TB.

For example, it is assumed that the SL information may be sent by using a plurality of TBs. The plurality of TBs include a TB 1 and a TB 2, and the TB 2 is a next TB of the TB 1 in time domain. Therefore, for the TB 1, the TB 2 is a next TB of the TB 1, and a slot (or a resource) that the TB 2 is in may be referred to as a periodic reserved resource of the TB 1.

### (Manners in which the first control information indicates the reserved resource.)

In this embodiment, the UE #1 may indicate the first reserved resource to another UE in a plurality of manners by sending the first control information. For example, two possible implementations are provided below.

Manner 1: The first control information includes a first time interval, where the first time interval is a time interval between the second slot and a slot that the first reserved resource is in. In this case, the first control information may indicate the first reserved resource in a slot that is after the first time interval after the second slot. For example, if the second slot is a slot t, and the first time interval is T1, the first control information may indicate the first reserved resource in a slot t+T1.

Optionally, in Manner 1, the first control information may further indicate a reserved resource of retransmitted information of the SL information.

In an example, it is assumed that the slot t+T1 is a reserved resource of initially transmitted information of the SL information, and B pieces of retransmitted information are continuously transmitted after the initially transmitted information. In this case, the first control information may indicate reserved resources of the B pieces of retransmitted information by indicating a value of B. For example, B=2, and the B pieces of retransmitted information are continuously transmitted after the initially transmitted information. In this case, the first control information may further indicate that a slot t+T1+1 and a slot t+T1+2 are respectively reserved resources of the B pieces of retransmitted information. The first reserved resource includes the reserved resource of the initially transmitted information and the reserved resources of the B pieces of retransmitted information.

In another example, it is assumed that the slot t+T1 is a reserved resource of initially transmitted information of the SL information, and B pieces of retransmitted information are discontinuously transmitted after the initially transmitted information. In this case, the first control information may indicate reserved resources of the B pieces of retransmitted information by indicating time intervals {r1, r2, ..., rB} between the initially transmitted information and the B pieces of retransmitted information. Optionally, the time intervals between the initially transmitted information and the B pieces of retransmitted information may be represented by using values of the time intervals, or may be represented by using TRIVs (time resource indication values). This is not limited in this application. For example, B=2, and the B pieces of retransmitted information are discontinuously transmitted after the initially transmitted information. In this case, the first control information may further indicate that a slot t+T1+r1 and a slot t+T1+r2 are respectively the reserved resources of the B pieces of retransmitted information. The first reserved resource includes the reserved resource of the initially transmitted information and the reserved resources of the B pieces of retransmitted information.

Manner 2: The first control information includes a second time interval and a periodicity, where the second time interval is a difference between the first time interval and the periodicity, and the periodicity is a periodicity for which the UE #1 sends the SL information. In this case, the first time interval may be represented by a sum of the second time interval and the periodicity. For example, if the second slot is a slot t, the second time interval is T2, and the periodicity is Pᵣₛᵥₚ, where T2=T1-Pᵣₛᵥₚ, the first control information may indicate the first reserved resource in a slot t+T2+Pᵣₛᵥₚ.

Similarly, in Manner 2, the first control information may also indicate a reserved resource of retransmitted information of the SL information.

For example, it is assumed that the slot t+T2+Pᵣₛᵥₚ is a reserved resource of initially transmitted information of the SL information, B=2, and B pieces of retransmitted information are continuously transmitted after the initially transmitted information. In this case, the first control information may indicate that a slot t+T2+Pᵣₛᵥₚ+1 and a slot t+T2+Pᵣₛᵥₚ+2 are respectively reserved resources of the B pieces of retransmitted information. For another example, B=2, B retransmitted resources are discontinuously transmitted after the initially transmitted resource, and time intervals between the initially transmitted information and the B pieces of retransmitted information are respectively {r1, r2, ..., rB}. In this case, the first control information may further indicate that a slot t+T2+Pᵣₛᵥₚ+r1 and a slot t+T2+Pᵣₛᵥₚ+r2 are respectively reserved resources of the B pieces of retransmitted information. The first reserved resource includes the reserved resource of the initially transmitted information and the reserved resources of the B pieces of retransmitted information.

In an optional embodiment, the first control information may further include a first time interval T1 and a periodicity Pᵣₛᵥₚ. In this case, the first control information may further indicate the first reserved resource in a slot t+T1+q×Pᵣₛᵥₚ. Optionally, when the first control information includes a second time interval T2 and a periodicity Pᵣₛᵥₚ, the first control information may further indicate the first reserved resource in a slot t+T2+q×Pᵣₛᵥₚ, where q is an integer greater than or equal to 1.

In a possible implementation, the first control information may indicate the first time interval by using a periodicity field and/or another field (for example, denoted as a first field) in the first control information, to implement Manner 1.

In another possible implementation, the first control information may jointly indicate the second time interval and the periodicity by using a first field and a periodicity field in the first control information, to implement Manner 2. For example, the first field indicates the second time interval, and the periodicity field indicates the periodicity. For another example, the first field indicates the periodicity, and the periodicity field indicates the second time interval.

Optionally, a specific field (for example, denoted as a second field) may indicate that the periodicity field indicates the periodicity or the first time interval. For example, when the second field is 0, the periodicity field indicates the periodicity, and when the second field is 1, the periodicity field indicates the first time interval. For another example, when the second field is 1, the periodicity field indicates the periodicity, and when the second field is 0, the periodicity field indicates the first time interval.

Indicating the first time interval/the second time interval may also be understood as indicating a value of the first time interval/the second time interval or indicating information about the first time interval/the second time interval. Indicating the periodicity may also be understood as indicating a periodicity value or indicating information about the periodicity.

Optionally, the second time interval may be a positive value, a negative value, or 0.

In a possible case, the second time interval is less than a third time interval. In another possible case, an absolute value of the second time interval is less than the third time interval. For example, the third time interval is, for example, c×periodicity, where a value range of c is [0, 1].

Optionally, the first control information may be carried in any one of SCI, a MAC CE, RRC, or PC-5 RRC.

Optionally, it may be indicated, through preconfiguration or network configuration, that the first control information is carried in any one of the SCI, the MAC CE, the RRC, or the PC-5 RRC. For example, it may be indicated, through preconfiguration or network configuration, that the first control information is carried in the MAC CE.

In a possible case, the first control information may be carried in the MAC CE. A MAC subheader includes an LCID (Logical Channel ID) value, and the LCID value may indicate that the MAC CE carries the first control information, where a decimal value of the LCID is an integer ranging from 20 to 61.

In a possible case, the first control information may be carried in the SCI. The SCI includes a bit indicating that the SCI carries the first control information. In an example, when a value of the bit is 0, it indicates that the SCI is used to carry the first control information. In another example, when a value of the bit is 1, it indicates that the SCI is used to carry the first control information.

In this embodiment, the first control information may be sent in a first COT, or may be sent in a second COT. The first COT is the COT that the first slot is in, in other words, the SL information is sent in the first COT. The first COT may also be referred to as a current COT.

In an example, the first control information may be sent in the first COT. In this case, the first slot is before the second slot.

In another example, the first control information may be sent in the second COT. In this case, the first COT is before the second COT in time domain.

In other words, the first control information may be sent in a same COT as the SL information in the first slot, or may be sent in a COT different from that of the SL information in the first slot. Alternatively, this may be understood as that, the second slot and the first slot may be in a same COT, or may be in different COTs. When the first control information and the SL information are sent in a same COT, the first slot is before the second slot. When the first control information and the SL information are sent in different COTs, a COT that the SL information is in is before a COT that the first control information is in.

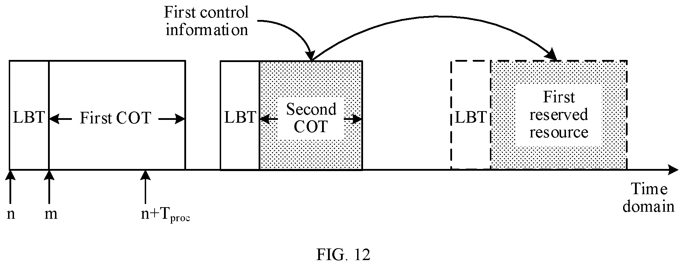

FIG. 11 and FIG. 12 are respectively diagrams of sending first control information in a first COT and sending the first control information in a second COT. The first control information may indicate the first reserved resource.

It should be further understood that, in FIG. 11 and FIG. 12, a slot n is a slot in which the UE #1 starts to perform LBT, a slot m is a slot in which the UE #1 successfully performs the LBT, and a slot n+T_{proc} is a slot that is selected by the UE #1 based on the sensing result and that can be used to transmit the SL information.

As shown in FIG. 11, the first control information may be sent in the first COT, in other words, the second slot and the first slot may be in a same COT. The first slot is before the second slot. Optionally, the second slot is after the slot n+T_{proc}, and the second slot is in an A^{th}-to-last slot in the first COT, where a value of A is, for example, 1.

As shown in FIG. 12, the first control information may alternatively be sent in the second COT, in other words, the second slot and the first slot may be in different COTs. The first COT is before the second COT in time domain.

Optionally, the second COT may be determined by accessing a channel through type 1 LBT, or may be determined by accessing a channel through type 2 LBT. This is not limited in this application.

It should be understood that, in this embodiment, the SL information may correspond to a specific service, and in some scenarios, the SL information may alternatively be replaced by a service corresponding to the SL information.

In a possible implementation, a plurality of different services of the UE #1 may be transmitted in a same COT.

For ease of description, an example in which two services (a service 1 and a service 2) of the UE #1 are transmitted in a same COT is used below for example description.

Assuming that a channel occupancy time for transmitting the service 1 A times in the first COT is less than a maximum channel occupancy time, the UE #1 may further transmit the service 2 in the first COT.

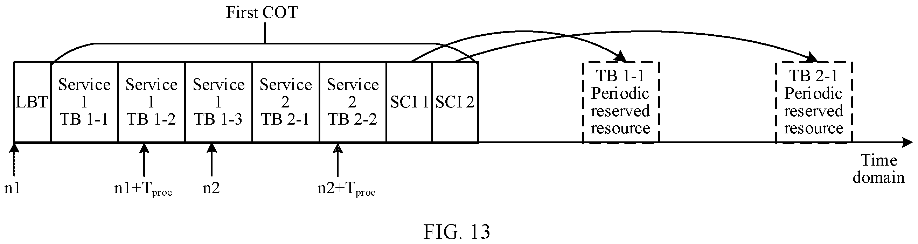

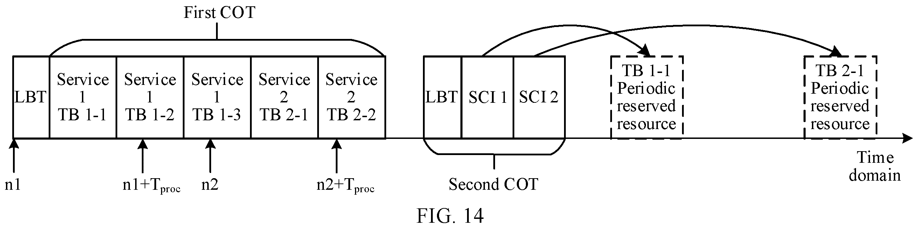

FIG. 13 and FIG. 14 are diagrams of transmitting a service 1 and a service 2 in a same COT.

Channel occupancy times of the service 1 and the service 2 do not exceed a maximum channel occupancy time. Optionally, a priority value or a CAPC of the service 1 is greater than or equal to a priority value or a CAPC of the service 2.

In FIG. 13 and FIG. 14, a slot n1 is a slot (a slot for triggering resource selection) in which the UE #1 starts to perform LBT for the service 1, and a slot n2 is a slot in which the UE #1 starts to select a resource for the service 2. A slot n1+T_{proc} is a slot in which processing of a sensing result is completed based on a transmission parameter of the service 1, in other words, a slot in which a resource that can be used to transmit the service 1 is selected based on the sensing result. A slot n2+T_{proc} is a slot in which processing of a sensing result is completed based on a transmission parameter of the service 2, in other words, a slot in which a resource that can be used to transmit the service 2 is selected based on the sensing result.

As shown in FIG. 13 and FIG. 14, one initial transmission (represented by a TB 1-1) and two retransmissions (represented by a TB 1-2 and a TB 1-3) of the service 1 are performed in the first COT, and one initial transmission (represented by a TB 2-1) and one retransmission (represented by a TB 2-2) of the service 2 are performed in the first COT.

First control information (for example, carried in SCI 1 in FIG. 13 and FIG. 14) of the service 1 is sent after the slot n1+T_{proc}. The first control information of the service 1 may be transmitted in a same COT as the service 1 (as shown in FIG. 13), or may be transmitted in a COT different from that of the service 1 (as shown in FIG. 14). The first control information of the service 1 may indicate a first reserved resource of the service 1. For brevity, FIG. 13 and FIG. 14 show only some resources (for example, a periodic reserved resource of the TB 1-1) in the first reserved resource of the service 1.

Similarly, first control information (for example, carried in SCI 2 in FIG. 13 and FIG. 14) of the service 2 is sent after the slot n2+T_{proc}. The first control information of the service 2 may be transmitted in a same COT as the service 2 (as shown in FIG. 13), or may be transmitted in a COT different from that of the service 2 (as shown in FIG. 14). The first control information of the service 2 may indicate a first reserved resource of the service 2. For brevity, FIG. 13 and FIG. 14 show only some resources (for example, a periodic reserved resource of the TB 2-1) in the first reserved resource of the service 2.

It may be understood that the service 1, the service 2, the first control information of the service 1, and the first control information of the service 2 may be transmitted in a plurality of sequences in time domain.

For example, the transmission sequence may be: A transmissions of the service 1, the first control information of the service 1, B transmissions of the service 2, and the first control information of the service 2; or may be A transmissions of the service 1, B transmissions of the service 2, the first control information of the service 1, and the first control information of the service 2. A and B are positive integers. For example, in FIG. 13 and FIG. 14, A is 3, and B is 2.

Optionally, when the first control information is carried in SCI, first control information of a plurality of services may be sent in a same slot. For example, the first control information of the service 1 and the first control information of the service 2 may be carried in same SCI. The first control information of the plurality of services may alternatively be sent in different slots. For example, the first control information of the service 1 and the first control information of the service 2 may be respectively carried in different SCI.

Optionally, when the first control information is carried in a MAC CE, first control information of a plurality of services may be sent in a same slot. For example, two MAC CEs are sent in one slot, and the two MAC CEs may respectively carry the first control information of the service 1 and the first control information of the service 2. The first control information of the plurality of services may alternatively be sent in different slots.

According to the method in this embodiment, a plurality of services (for example, the service 1 and the service 2) are transmitted in a same COT, to prevent the service 2 from accessing a channel again based on type 1 LBT, thereby reducing a channel access time.

Optionally, in this embodiment, the SL information includes second control information, and the second control information may indicate a second reserved resource of the UE #1.

That the SL information includes second control information may also be understood as that a resource that carries the SL information is also a resource that carries the second control information.

In a possible implementation, the SL information is sent before the slot n+T_{proc}, that is, the second control information is sent before the slot n+T_{proc}. In other words, when sending the second control information, the UE #1 has not selected, based on the sensing result, a resource that can be used to send the SL information.

Therefore, in an optional implementation, the second control information does not indicate a periodic reserved resource, to avoid reserving a reserved resource of another UE, that is, avoid improper resource reservation. In this case, a periodicity field in the second control information may be a fixed value, for example, 0, or the periodicity field in the second control information may be omitted or invalid.

In another optional implementation, the second control information indicates a reserved resource in a current COT (for example, the first COT), in other words, the second reserved resource is in the current COT.

Optionally, the second control information may indicate at least one of the following reserved resources, in other words, the second reserved resource may include at least one of the following reserved resources:
a reserved resource in a current COT, a reserved resource for retransmission in the current COT, and a periodic reserved resource in the current COT. The current COT is the COT that the first slot is in.

In this implementation, when sending the second control information, the UE #1 has not selected, based on the sensing result, a resource that can be used by the UE #1 to send the SL information. Therefore, the UE #1 may indicate the reserved resource in the current COT by using the second control information, instead of indicating a reserved resource in a next COT by using the second control information, thereby helping avoid reserving a reserved resource of another UE, that is, avoid improper resource reservation.

Optionally, the second control information may further include at least one piece of information such as a physical layer priority and a DMRS pattern (pattern).

In a possible implementation, the SL information includes a PSCCH and a PSSCH, where the PSCCH may be used to carry the second control information, and the PSSCH may be used to carry data information.

Optionally, the second control information may be, for example, carried in first-order SCI. The first-order SCI may include a bit indicating that the first-order SCI carries the second control information. In an example, when a value of the bit is 0, it indicates that the first-order SCI is used to carry the second control information. In another example, when a value of the bit is 1, it indicates that the first-order SCI is used to carry the second control information.

Optionally, a specific bit in the first-order SCI may indicate that the first-order SCI is used to carry the first control information or the second control information. In an example, when a value of the bit is 0, it indicates that the first-order SCI is used to carry the second control information; and when the value of the bit is 1, it indicates that the first-order SCI is used to carry the first control information. In another example, when a value of the bit is 1, it indicates that the first-order SCI is used to carry the second control information; and when the value of the bit is 1, it indicates that the first-order SCI is used to carry the first control information.

Optionally, whether a specific field (for example, denoted as a third field) is omitted (omit) may indicate that the first-order SCI is used to carry the first control information or the second control information. For example, when the third field is omitted (omit), the first-order SCI is used to carry the first control information; and when the third field exists, the first-order SCI is used to carry the second control information.

Optionally, whether a specific field (for example, denoted as a third field) is 0 bits may indicate that the first-order SCI is used to carry the first control information or the second control information. For example, when the third field is 0 bits, the first-order SCI is used to carry the first control information; and when the third field is not 0 bits, the first-order SCI is used to carry the second control information.

In a possible implementation, that the first control information indicates the first reserved resource of the SL information may also be understood as that the first control information indicates a first reserved resource of data in a resource that the second control information is in.

For example, a manner in which the first control information indicates the first reserved resource of the data in the resource that the second control information is in may be: identification information indicated by the first control information is the same as identification information indicated by the second control information, the identification information indicated by the first control information is the same as some bits of the identification information indicated by the second control information, or some bits of the identification information indicated by the first control information are the same as the identification information indicated by the second control information.

In a possible case, if the first control information is carried in the first-order SCI, the identification information indicated by the first control information may also be understood as that the first control information indicates second-order SCI, and the second-order SCI includes identification information. In another possible case, if the first control information is carried in the first-order SCI and the second-order SCI, the identification information indicated by the first control information may also be understood as the identification information included in the second-order SCI.

Similarly, for the second control information, in a possible case, if the first control information is carried in the first-order SCI, the identification information indicated by the first control information may also be understood as that the first control information indicates second-order SCI, and the second-order SCI includes identification information. In another possible case, if the first control information is carried in the first-order SCI and the second-order SCI, the identification information indicated by the first control information may also be understood as the identification information included in the second-order SCI.

For example, the first control information may indicate at least one of the following identification information: first source ID information, first destination ID information, and first UE ID information. The second control information may indicate at least one of the following identification information: second source ID information, second destination ID information, and second UE ID information.

For example, that the first control information indicates the first reserved resource of the data in the resource that the second control information is in may include, for example, the following several cases:
Case 1: The first source ID information and the first destination ID information are respectively the same as the second source ID information and the second destination ID information; the first source ID information and the first destination ID information are respectively the same as some bits of the second source ID information and some bits of the second destination ID information; or some bits of the first source ID information and some bits of the first destination ID information are respectively the same as the second source ID information and the second destination ID information.
Case 2: The first source ID information, the first destination ID information, and the first UE ID information are respectively the same as the second source ID information, the second destination ID information, and the second UE ID information; the first source ID information, the first destination ID information, and the first UE ID information are respectively the same as some bits of the second source ID information, some bits of the second destination ID information, and some bits of the second UE ID information; or some bits of the first source ID information, some bits of the first destination ID information, and some bits of the first UE ID information are respectively the same as the second source ID information, the second destination ID information, and the second UE ID information.

According to the method in this embodiment, when the LBT succeeds, the UE #1 may have not selected, based on the sensing result, a resource that can be used to transmit the SL information. Therefore, the UE #1 may first send the SL information, in other words, first access a channel, and does not send, until selecting, based on the sensing result, a resource that can be used to transmit the SL information, the first control information to indicate the reserved resource of the UE #1 to another UE. When indicating the reserved resource by using the first control information, the UE #1 considers the sensing result, in other words, considers a reserved resource of another UE. Therefore, this can avoid a resource collision between the reserved resource of the UE #1 and the reserved resource of the another UE.

With reference to FIG. 6 to FIG. 14, the foregoing describes a method in which the UE #1 selects, based on an LBT result, a resource for sending SL information, and describes a method for indicating reservation information of the UE #1 to another UE by sending the first control information and/or the second control information.

It should be understood that, that the methods in FIG. 6 to FIG. 14 are performed by the UE #1 is merely an example for description, and the UE #1 may alternatively be replaced by any other UE, for example, a UE #2.

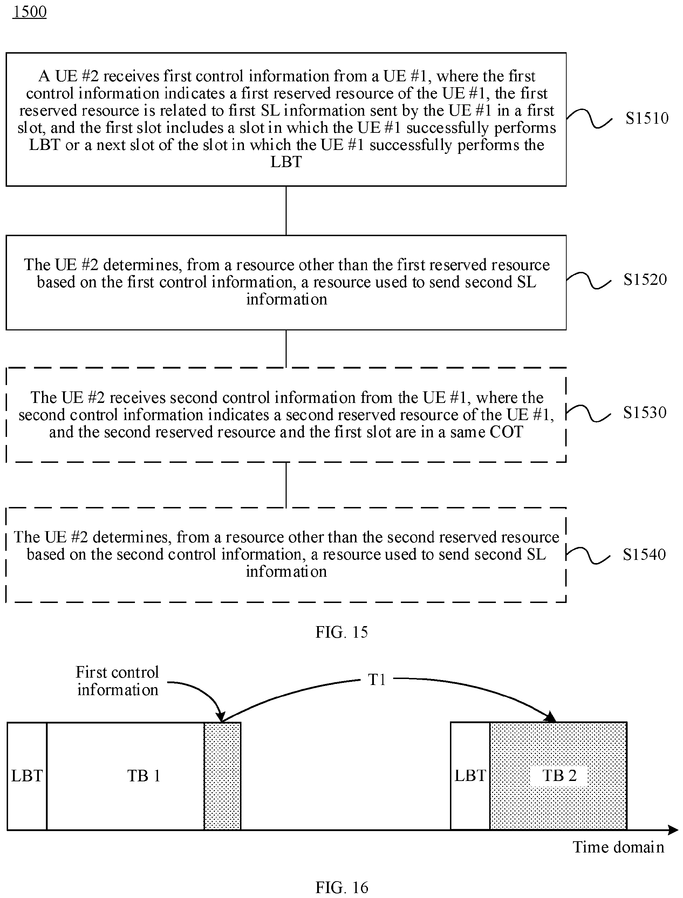

With reference to FIG. 15 to FIG. 20, the following describes a method in which another UE (for example, a UE #2) excludes a reserved resource of the UE #1 based on the first control information and/or the second control information sent by the UE #1.

For ease of description, an example in which the method is performed by a UE #2 is used below for example description.

FIG. 15 is a diagram of another example of a resource selection method according to an embodiment of this application. The method 1500 may include S1510 to S1540.

S1510: A UE #2 receives first control information from a UE #1, where the first control information indicates a first reserved resource of the UE #1, the first reserved resource is related to first SL information sent by the UE #1 in a first slot, and the first slot includes a slot in which the UE #1 successfully performs LBT or a next slot of the slot in which the UE #1 successfully performs the LBT.

That a UE #2 (that is, an example of a second terminal device) receives first control information from a UE #1 may also be understood as that the UE #2 detects the first control information from the UE #1.

That the first control information indicates a first reserved resource of the UE #1 may also be understood as that the first control information indicates the first reserved resource of SL information sent by the UE #1.

That the first reserved resource is related to first SL information sent by the UE #1 in a first slot may be understood as that the first reserved resource is reserved for the first SL information in the first slot, in other words, the first reserved resource is a reserved resource of the first SL information in the first slot.

Optionally, a COT that the first reserved resource is in is after a COT that the first slot is in.

In this embodiment, the UE #1 may first send the first SL information in the first slot, and then indicate the first reserved resource by using the first control information. For example, the UE #1 may send the first control information after selecting, based on a sensing result, a resource that can be used to transmit the first SL information, to avoid improper resource reservation.

Optionally, the first control information may be, for example, the first control information in S1030 in the foregoing method embodiment. For detailed descriptions of the first control information, refer to S1030 in the foregoing method embodiment. To avoid repetition, details are not described herein again.

S1520: The UE #2 determines, from a resource other than the first reserved resource based on the first control information, a resource used to send second SL information.

The determining, from a resource other than the first reserved resource, a resource used to send second SL information may alternatively be understood as sending the second SL information on the resource other than the first reserved resource.

In a possible implementation, before the UE #2 sends the second SL information, a manner in which the UE #2 determines, from the resource other than the first reserved resource, a resource used to send the second SL information may be, for example, as follows: The UE #2 excludes the first reserved resource of the UE #1 from a candidate resource set of the UE #2 based on the first control information, to avoid a resource collision caused when the UE #2 sends the second SL information on the first reserved resource of the UE #1.

In a possible implementation, the first reserved resource includes a reserved resource that is after a first time interval after a slot that the first control information is in.

It should be understood that, the slot that the first control information is in may also be understood as a slot occupied by the first control information, or may also be understood as a slot in which the UE #1 sends the first control information.

In this embodiment, the UE #2 may exclude the first reserved resource of the UE #1 based on the first control information in a plurality of manners. For example, two possible implementations are described below.

Manner 1: The first control information includes a first time interval. In this case, the UE #2 may exclude, based on the first control information, the first reserved resource that is after the first time interval after the slot that the first control information is in. For example, if the slot that the first control information is in is a slot t, and the first time interval is T1, the UE #2 may exclude the first reserved resource in a slot t+T1 based on the first control information.

FIG. 16 is a diagram of an example in which a first reserved resource of a UE #1 is excluded in Manner 1. The first time interval is T1, and the UE #2 may exclude the first reserved resource (that is, a slot that a TB 2 is in) of the UE #1 based on T1. The slot that the TB 2 is in may also be referred to as a periodic reserved resource of a TB 1.

Optionally, the first reserved resource may include a reserved resource of initially transmitted information of the first SL information and reserved resources of B pieces of retransmitted information.

Optionally, in Manner 1, it is assumed that the slot t+T1 is the reserved resource of the initially transmitted information of the first SL information. If the first control information further indicates the reserved resources of the B pieces of retransmitted information, the UE #2 may further exclude the reserved resources of the B pieces of retransmitted information based on the first control information. For example, B=2, the B pieces of retransmitted information are continuously transmitted after the initially transmitted information, and the first control information indicates a value (that is, 2) of B. In this case, the UE #2 may exclude the first reserved resource in a slot t+T1+1 and a slot t+T1+2 based on the first control information. For another example, B=2, the B pieces of retransmitted information are discontinuously transmitted after the initially transmitted information, and the first control information indicates that time intervals between the initially transmitted information and the B pieces of retransmitted information are {r1, r2}. In this case, the UE #2 may exclude the first reserved resource in a slot t+T1+r1 and a slot t+T1+r2 based on the first control information.

Manner 2: The first control information includes a second time interval and a periodicity, where the second time interval is a difference between the first time interval and the periodicity. In this case, the first time interval may be represented by a sum of the second time interval and the periodicity. For example, the slot that the first control information is in is a slot t, the second time interval is T2, and the periodicity is Pᵣₛₛₚ, where T2=T1-Pᵣₛᵥₚ. In this case, the UE #2 may exclude the first reserved resource in a slot t+T2+Pᵣₛᵥₚ based on the first control information.

Similarly, in Manner 2, it is assumed that the slot t+T2+Pᵣₛᵥₚ is a reserved resource of initially transmitted information of the first SL information. If the first control information further indicates reserved resources of B pieces of retransmitted information, the UE #2 may further exclude the reserved resources of the B pieces of retransmitted information based on the first control information. For example, B=2, the B pieces of retransmitted information are continuously transmitted after the initially transmitted information, and the first control information indicates a value (that is, 2) of B. In this case, the UE #2 may exclude the first reserved resource in a slot t+T2+Pᵣₛᵥₚ+1 and a slot t+T2+Pᵣₛᵥₚ+2 based on the first control information. For another example, B=2, the B pieces of retransmitted information are discontinuously transmitted after the initially transmitted information, and the first control information indicates that time intervals between the initially transmitted information and the B pieces of retransmitted information are {r1, r2}. In this case, the UE #2 may exclude the first reserved resource in a slot t+T2+Pᵣₛᵥₚ+r1 and a slot t+T2+Pᵣₛᵥₚ+r2 based on the first control information.

In an optional embodiment, if the first control information includes a first time interval T1 and a periodicity Pᵣₛᵥₚ, the UE #2 may further exclude the first reserved resource in a slot t+T1+q×Pᵣₛᵥₚ based on the first control information. Similarly, when the first control information includes a second time interval T2 and a periodicity Pᵣₛᵥₚ, the UE #2 may further exclude the first reserved resource in a slot t+T2+q×Pᵣₛᵥₚ based on the first control information, where q is an integer greater than or equal to 1.

Optionally, if the first reserved resource is in a resource selection window of the UE #2, in other words, if the first reserved resource belongs to the candidate resource set of the UE #2, the UE #2 excludes the first reserved resource.

Optionally, if an RSRP measurement value of the first reserved resource is greater than a first signal strength threshold, the UE #2 excludes the first reserved resource. The first signal strength threshold is related to a physical layer priority of the UE #1 and/or a physical layer priority of the UE #2.

Optionally, the method 1500 may further include S1530: The UE #2 receives second control information from the UE #1, where the second control information indicates a second reserved resource of the UE #1, and the second reserved resource and the first slot are in a same COT.

Optionally, the second control information may be, for example, the second control information in S1030 in the foregoing method embodiment. For detailed descriptions of the second control information, refer to S1030 in the foregoing method embodiment. To avoid repetition, details are not described herein again.

Optionally, the method 1500 may further include S1540: The UE #2 determines, from a resource other than the second reserved resource based on the second control information, a resource used to send the second SL information.

The determining, from a resource other than the second reserved resource, a resource used to send the second SL information may alternatively be understood as sending the second SL information on the resource other than the second reserved resource.

In other words, in a possible implementation, when selecting a resource for sending the second SL information, the UE #2 not only needs to exclude the first reserved resource of the UE #1 based on the first control information, but also needs to exclude the second reserved resource of the UE #1 based on the second control information.

According to the method in this embodiment, the UE #2 may determine, from a resource other than a reserved resource (for example, the first reserved resource, or for another example, the second reserved resource) of the UE #1 based on control information (for example, the first control information, or for another example, the second control information) from the UE #1, a resource used to send the second SL information. Therefore, the second SL information can be prevented from being sent on the reserved resource of the UE #1, thereby improving reliability of sending the first SL information by the UE #1.

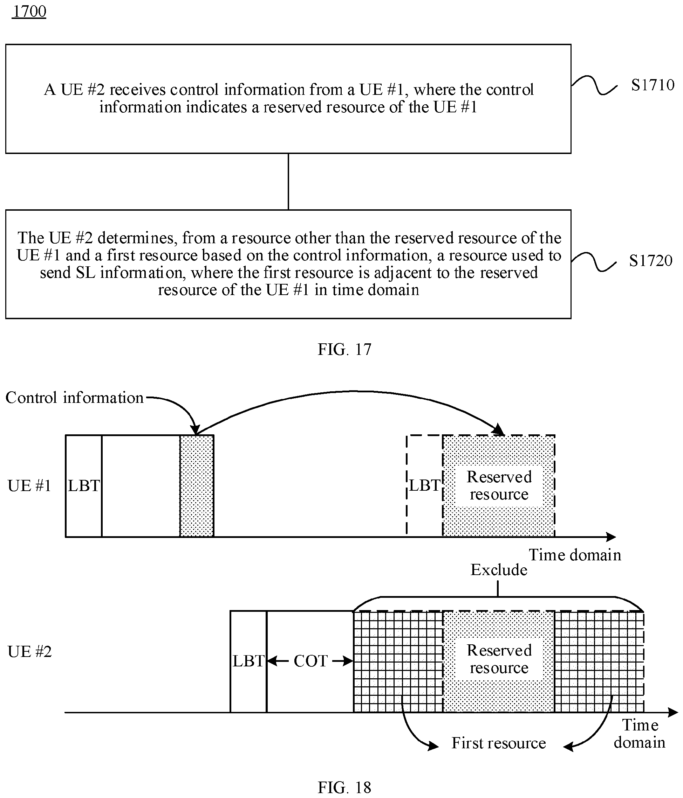

FIG. 17 is a diagram of another example of a resource selection method according to an embodiment of this application. The method 1700 may include S1710 and S 1720.

S1710: A UE #2 receives control information from a UE #1, where the control information indicates a reserved resource of the UE #1.

It should be understood that the method provided in this embodiment is applicable to a scenario in which various control information indicates a reserved resource. In other words, in this embodiment, the control information from the UE #1 may be, for example, at least one of the following control information: the first control information in S1030, the second control information in S1030, and other control information that indicates a reserved resource. This is not limited. Correspondingly, the reserved resource in this embodiment may be, for example, at least one of the following reserved resources: the first reserved resource in S1030, the second reserved resource in S1030, and another reserved resource indicated by using the control information. This is not limited.

It should be further understood that, the method provided in this embodiment may be implemented based on the foregoing method 1500, or may be independently implemented. This is not limited in this application.

S1720: The UE #2 determines, from a resource other than the reserved resource of the UE #1 and a first resource based on the control information, a resource used to send SL information, where the first resource is adjacent to the reserved resource of the UE #1 in time domain.

In S1720, the UE #2 may determine, from the resource other than the reserved resource of the UE #1 and the first resource based on the control information from the UE #1, a resource used to send the SL information, to prevent the UE #2 from sending the SL information on the reserved resource of the UE #1 and the first resource.

In other words, in this embodiment, the UE #2 not only needs to determine, from a resource other than the reserved resource of the UE #1, a resource used to send the SL information, but also needs to determine, from a resource other than the first resource, a resource used to send the SL information, in other words, the UE #2 not only needs to exclude the reserved resource of the UE #1, but also needs to additionally exclude the resource adjacent to the reserved resource in time domain.

Optionally, the UE #2 may determine, in any one of the following manners from the resource other than the reserved resource of the UE #1 and the first resource, a resource used to send the SL information:
The UE #2 excludes the reserved resource of the UE #1 and the first resource from a candidate resource set of the UE #2; or the UE #2 sends the SL information on the resource other than the reserved resource of the UE #1 and the first resource; or the UE #2 sends the SL information after slots that the reserved resource of the UE #1 and the first resource are in; or the UE #2 cancels SL information transmission in COTs in the slots that the reserved resource of the UE #1 and the first resource are in; or a start location of a resource selection window of the UE #2 is set to be located after the slots that the reserved resource of the UE #1 and the first resource are in. The slot that the first resource is in is a preset time period adjacent to the slot that the reserved resource of the UE #1 is in, in other words, the first resource is adjacent to the reserved resource of the UE #1 in time domain.

Optionally, the slot that the first resource is in may be a preset time period before the slot that the reserved resource of the UE #1 is in.

It should be understood that, in this application, the slot that the first resource is in may also be understood as a slot occupied by the reserved resource, and the slot that the reserved resource is in may also be understood as a slot occupied by the reserved resource.

Because the UE #2 sends the SL information in the preset time period before the slot that the reserved resource is in, the UE #1 may fail in performing LBT before the slot that the reserved resource is in, and consequently, the UE #1 cannot send the SL information on the reserved resource. Therefore, the preset time period before the slot that the reserved resource is in is additionally excluded, to avoid that the UE #1 fails in performing the LBT before the slot that the reserved resource is in, thereby improving reliability of sending the SL information by the UE #1.

Optionally, the slot that the first resource is in may alternatively be a preset time period after the slot that the reserved resource of the UE #1 is in.

Because a slot in which the UE #1 successfully performs LBT may be later than the slot that the reserved resource of the UE #1 is in, the UE #2 may further additionally exclude the preset time period after the slot that the reserved resource is in. In this way, even if the UE #1 cannot send the SL information on the reserved resource of the UE #1, because the UE #2 excludes the preset time period after the slot that the reserved resource is in, if the UE #1 successfully performs the LBT in the preset time period after the slot that the reserved resource is in, the UE #1 can still access a channel and successfully send the SL information, thereby improving a success rate and reliability of sending the SL information by the UE # 1.

Optionally, the first resource may further include both the preset time period before the slot that the reserved resource of the UE #1 is in and the preset time period after the slot that the reserved resource of the UE #1 is in.

FIG. 18 is a diagram of an example in which a reserved resource of a UE #1 and a first resource are excluded. The first resource includes the preset time period before the slot that the reserved resource of the UE #1 is in and the preset time period after the slot that the reserved resource of the UE #1 is in.

Optionally, the UE #2 may further exclude the reserved resource of the UE #1 and the first resource in the following manner:
The UE #2 determines an end location of a COT of the UE #2 in time domain based on the slots that the reserved resource of the UE #1 and the first resource are in. For example, when the slot that the first resource is in is the preset time period before the slot that the reserved resource of the UE #1 is in, the UE #2 may determine that the end location of the COT is before the slot that the first resource is in. For another example, when the slot that the first resource is in is the preset time period after the slot that the reserved resource of the UE #1 is in, the UE #2 may determine that the end location of the COT is before the slot that the reserved resource of the UE #1 is in. For still another example, when the first resource includes both the preset time period before the slot that the reserved resource of the UE #1 is in and the preset time period after the slot that the reserved resource of the UE #1 is in, the UE #2 may determine that the end location of the COT is before the preset time period before the slot that the reserved resource of the UE #1 is in. Therefore, the UE #2 can be prevented from sending the SL information in the slots that the reserved resource of the UE #1 and the first resource are in.

Optionally, in a scenario in which the UE #2 has not accessed a channel, the UE #2 may further exclude the reserved resource of the UE #1 and the first resource in one of the following manners: The UE #2 does not perform LBT in the slot that the reserved resource of the UE #1 is in and the slot that the first resource is in; or the UE #2 determines, based on the slots that the reserved resource of the UE #1 and the first resource are in, a moment or a time period for performing the LBT by the UE #2; or the UE #2 does not measure, in the slot that the reserved resource of the UE #1 is in and the slot that the first resource is in, whether a channel is occupied.

That the LBT is not performed may include the following two cases:
Case 1: The UE #2 does not perform the LBT in the slot that the reserved resource of the UE #1 is in and the slot that the first resource is in, and starts to perform the LBT after the slots that the reserved resource of the UE #1 and the first resource are in.
Case 2: The UE #2 performs the LBT (the LBT has not succeeded) before the slot that the reserved resource of the UE #1 is in and the slot that the first resource is in, but suspends execution of the LBT in the slot that the reserved resource of the UE #1 is in and/or the slot that the first resource is in. In other words, the UE #2 suspends execution of the LBT after starting to perform the LBT.

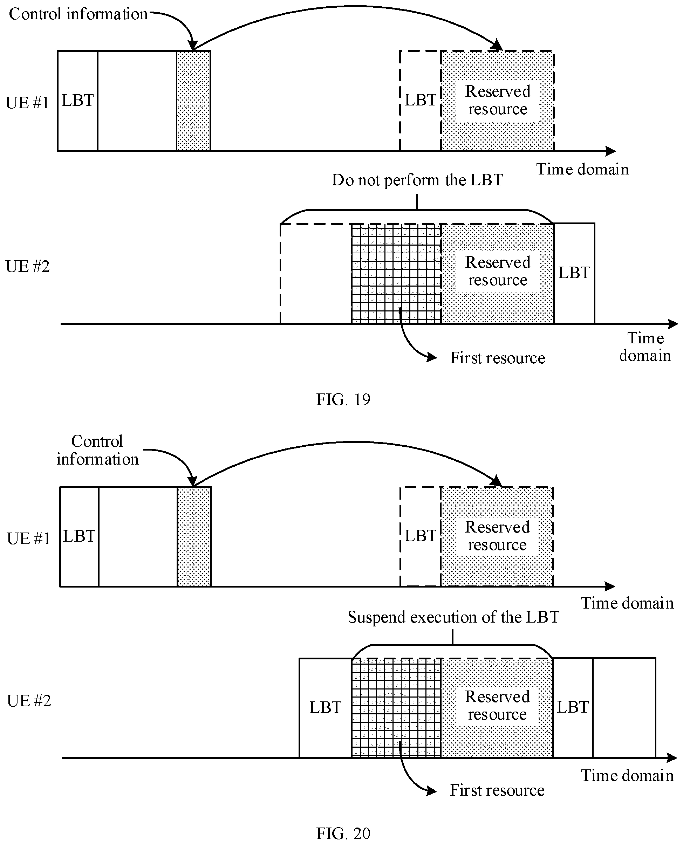

FIG. 19 is a diagram of another example in which a reserved resource and a first resource of a UE #1 are excluded. The first resource includes the preset time period before the slot that the reserved resource of the UE #1 is in.

As shown in FIG. 19, the UE #2 does not perform LBT in the slots that the reserved resource of the UE #1 and the first resource are in, and starts to perform the LBT after the slots that the reserved resource of the UE #1 and the first resource are in.

FIG. 20 is a diagram of another example in which a reserved resource of a UE #1 and a first resource are excluded. The first resource includes the preset time period before the slot that the reserved resource of the UE #1 is in.

As shown in FIG. 20, the UE #2 performs LBT (the LBT has not succeeded) before the slots that the reserved resource of the UE #1 and the first resource are in, but does not perform the LBT in the slots that the reserved resource of the UE #1 and the first resource are in. In other words, the UE #2 suspends execution of the LBT in the slots that the reserved resource of the UE #1 and the first resource are in.

For example, suspending execution of the LBT may be implemented by suspending an LBT counter (a value of the LBT counter does not decrease).

A slot in which the UE #2 sends the SL information is a slot in which the UE #2 successfully performs LBT or a next slot of the slot in which the UE #2 successfully performs the LBT. Therefore, according to the method in this embodiment, the UE #2 does not perform the LBT in the slots that the reserved resource of the UE #1 and the first resource are in, so that the UE #2 can be prevented from sending the SL information on the reserved resource of the UE #1 and the first resource, to prevent the UE #1 from failing in performing the LBT, thereby improving reliability of sending the SL information by the UE #1.

Optionally, the first resource may include a plurality of slots; or the first resource may include a plurality of resources, and the resource may be a slot.

In a possible implementation, the UE #2 may determine a time domain length of the first resource based on at least one of a physical layer priority of the UE #1, a CAPC of the UE #1, a physical layer priority of the UE #2, and a CAPC of the UE #2. The time domain length of the first resource may also be understood as a length of a time occupied by the first resource in time domain. The physical layer priority and/or the CAPC of the UE #1 may be carried in the control information of the UE #1.

Optionally, the time domain length of the first resource is related to the CAPC of the UE #1 and/or the CAPC of the UE #2. For example, a smaller CAPC value of the UE #1 indicates a longer time domain length of the first resource. For another example, a smaller CAPC value of the UE #2 indicates a shorter time domain length of the first resource.

Optionally, the time domain length of the first resource is related to a priority of the UE #1 and/or a priority of the UE #2. For example, a smaller priority value of the UE #1 indicates a longer time domain length of the first resource. For another example, a smaller priority value of the UE #2 indicates a shorter time domain length of the first resource. In an example, if the first resource is the preset time period before the slot that the reserved resource of the UE #1 is in or the preset time period after the slot that the reserved resource of the UE #1 is in, the time domain length of the first resource may meet T_{f}+m_{P}×Tₛₗ+N×Tₛₗ.

In another example, if the first resource includes both the preset time period before the slot that the reserved resource of the UE #1 is in and the preset time period after the slot that the reserved resource of the UE #1 is in, the time domain length of the first resource may meet T_{f}+mₚ×Tₛₗ+N×Tₛₗ or T_{f}+mₚ×Tₛₗ+N×Tₛₗ+C. A value of mₚ may be determined based on the CAPC of the UE #1, and a value of N may be *CWₘᵢₙ, CWₘₐₓ,* or a random number whose value range is [0, *CWₚ*]. *CWₘᵢₙ, CWₘₐₓ,* or *CWₚ* may be determined based on the CAPC of the UE #1. C is a constant. Optionally, C may be different constants in cases of different SCSs.

Optionally, when at least one of the following conditions is met, the UE #2 may exclude the first resource: a physical layer priority value of the UE #1 is less than a first priority value, the CAPC of the UE #1 is less than a second priority value, the physical layer priority value of the UE #1 is less than a physical layer priority value of the UE #2, and the CAPC of the UE #1 is less than the CAPC of the UE #2.

Optionally, when a channel busy ratio (channel busy ratio, CBR) is less than a first congestion threshold, or an inter-system CBR is less than a second congestion threshold, the UE #2 may exclude the first resource.

The first priority value, the second priority value, the first congestion threshold, or the second congestion threshold may be a value, or may be a value range. This is not limited. The first priority value, the second priority value, the first congestion threshold, or the second congestion threshold may be a fixed value predefined in a protocol, may be a value generated according to a predefined rule, may be a preconfigured fixed value, or may be a dynamically configured value. This is not limited.

According to the method in this embodiment, based on the control information from the UE #1, the UE #2 may not only exclude the reserved resource of the UE #1, but also exclude the first resource. When the first resource is the preset time period before the slot that the reserved resource of the UE #1 is in, it is helpful to prevent the UE #1 from failing in performing LBT before the slot that the reserved resource is in, thereby improving reliability of sending the SL information by the UE #1. When the first resource is the preset time period after the slot that the reserved resource of the UE #1 is in, if the UE #1 fails in performing LBT before the slot that the reserved resource is in or in the slot that the reserved resource is in, the UE #1 may further send the SL information based on an LBT result in the preset time period after the slot that the reserved resource is in, thereby improving a success rate and reliability of sending the SL information by the UE # 1.

It may be understood that, the examples in FIG. 6 to FIG. 20 in embodiments of this application are merely intended to help a person skilled in the art understand embodiments of this application, but are not intended to limit embodiments of this application to specific scenarios in the examples. A person skilled in the art may definitely make various equivalent modifications or changes according to the examples shown in FIG. 6 to FIG. 20, and such modifications or changes also fall within the scope of embodiments of this application.

It may be further understood that, some optional features in embodiments of this application may be independent of other features in some scenarios, or may be combined with other features in some scenarios. This is not limited.

It may be further understood that, the solutions in embodiments of this application may be properly combined for use, and explanations or descriptions of terms appearing in embodiments may be mutually referenced or explained in embodiments. This is not limited.

It may be further understood that, various numeric sequence numbers in embodiments of this application do not mean execution sequences, but are merely for differentiation for ease of description, and therefore should not constitute any limitation on an implementation process in embodiments of this application.

It may be further understood that, the formulas used in embodiments of this application are examples for description, and do not constitute a limitation on the protection scope of embodiments of this application. In a process of calculating the foregoing related parameters, calculation may be performed according to the foregoing formulas, calculation may be performed according to variations of the foregoing formulas, calculation may be performed according to a formula determined by using the method provided in embodiments of this application, or calculation may be performed in another manner to meet a result of calculation of the formulas.

It may be further understood that names of information transmitted between communication apparatuses in embodiments of this application do not limit the protection scope of embodiments of this application.

It may be further understood that the term " and/or" in this specification describes only an association relationship between associated objects and indicates that three relationships may exist. For example, "A and/or B" may represent the following three cases: Only A exists, both A and B exist, and only B exists. In addition, the character "/" in this specification generally indicates an "or" relationship between the associated objects.

It should be further understood that, various numeric numbers such as first, second, #1, and #2 in this specification are merely used for differentiation for ease of description, and are not used to limit the scope of embodiments of this application.

It may be further understood that, in the foregoing method embodiments, methods and operations implemented by a terminal device (for example, a first terminal device, or for another example, a second terminal device) may also be implemented by a component (for example, a chip or a circuit) of a terminal device. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the foregoing method embodiments are also applicable to the following apparatus embodiments.

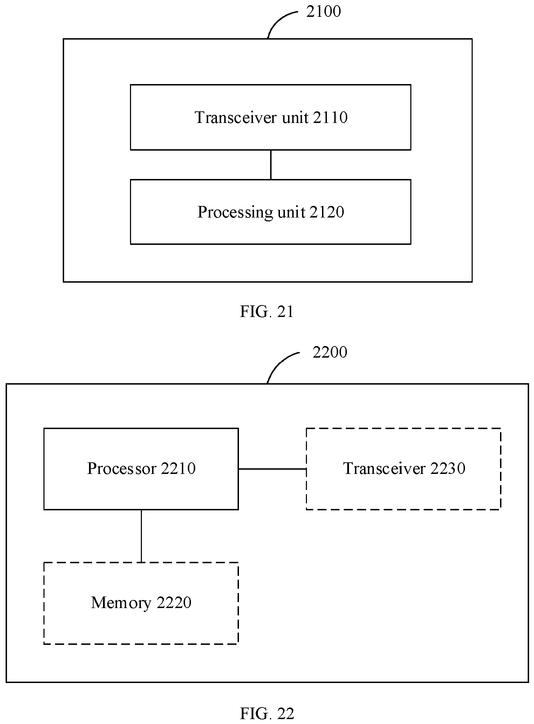

FIG. 21 is a schematic block diagram of a resource selection apparatus according to an embodiment of this application. The apparatus 2100 includes a transceiver unit 2110 and a processing unit 2120. The transceiver unit 2110 may be configured to implement a corresponding communication function, for example, sending sidelink information. The transceiver unit 2110 may also be referred to as a communication interface or a communication unit. The processing unit 2120 may be configured to implement a corresponding processing function, for example, performing LBT.

Optionally, the apparatus 2100 further includes a storage unit. The storage unit may be configured to store instructions and/or data. The processing unit 2120 may read the instructions and/or the data in the storage unit, so that the apparatus implements actions of the first terminal device or the second terminal device in the foregoing method embodiments.

In a first design, the apparatus 2100 may be the UE #1 in the foregoing embodiments, or may be a component (for example, a chip) of the UE #1. The apparatus 2100 may implement steps or procedures performed by the UE #1 in the foregoing corresponding method embodiment. The transceiver unit 2110 may be configured to perform receiving and sending-related operations of the UE #1 in the foregoing method embodiment. The processing unit 2120 may be configured to perform processing-related operations of the UE #1 in the foregoing method embodiment. When the apparatus 2100 is the UE #1, the transceiver unit 2110 may be a transceiver or an input/output interface, and the processing unit 2120 may be at least one processor. Optionally, the transceiver may be a transceiver circuit. Optionally, the input/output interface may be an input/output circuit. When the apparatus 2100 is a chip, a chip system, or a circuit in the UE #1, the transceiver unit 2110 may be an input/output interface, an interface circuit, an output circuit, an input circuit, a pin, a related circuit, or the like on the chip, the chip system, or the circuit, and the processing unit 2120 may be at least one processor, processing circuit, logic circuit, or the like.

In a possible implementation, the processing unit 2120 is configured to perform listen before talk LBT. The transceiver unit 2110 is configured to send sidelink information in a first time unit, where the first time unit includes a time unit in which the UE #1 successfully performs the LBT or a next time unit of the time unit in which the UE #1 successfully performs the LBT.

Optionally, the transceiver unit 2110 is further configured to send the sidelink information in the first time unit and at least one time unit after the first time unit.

Optionally, the transceiver unit 2110 is further configured to send first control information in a second time unit, where the first control information indicates a first reserved resource of the sidelink information, and the first reserved resource is a resource determined by the UE #1 based on a sensing result.

Optionally, a channel occupancy time COT that the first reserved resource is in is after a COT that the first time unit is in.

Optionally, the first control information includes a first time interval, where the first time interval is a time interval between the second time unit and a time unit that the first reserved resource is in; or the first control information includes a second time interval and a periodicity, where the second time interval is a difference between the first time interval and the periodicity, and the periodicity is a periodicity for which the UE #1 sends the sidelink information.

Optionally, the second time unit is in a first COT, where the first COT is the COT that the first time unit is in, and the first time unit is before the second time unit; or the second time unit is in a second COT, where the first COT is before the second COT.

Optionally, the sidelink information includes second control information, the second control information indicates a second reserved resource of the UE #1, and the second reserved resource and the first time unit are in a same COT.

Optionally, identification information indicated by the first control information is the same as identification information indicated by the second control information, the identification information indicated by the first control information is some bits of the identification information indicated by the second control information, or some bits of the identification information indicated by the first control information are the identification information indicated by the second control information.

Optionally, the first time unit is a resource determined by the UE #1 based on a sensing result.

Optionally, before the UE #1 successfully performs the LBT, the processing unit 2120 is further configured to successfully perform the LBT at least one time.

In a second design, the apparatus 2100 may be the UE #2 in the foregoing embodiment, or may be a component (for example, a chip) of the UE #2. The apparatus 2100 may implement steps or procedures performed by the UE #2 in the foregoing corresponding method embodiment. The transceiver unit 2110 may be configured to perform receiving and sending-related operations of the UE #2 in the foregoing method embodiment. The processing unit 2120 may be configured to perform processing-related operations of the UE #2 in the foregoing method embodiment. When the apparatus 2100 is the UE #2, the transceiver unit 2110 may be a transceiver or an input/output interface, and the processing unit 2120 may be at least one processor. Optionally, the transceiver may be a transceiver circuit. Optionally, the input/output interface may be an input/output circuit. When the apparatus 2100 is a chip, a chip system, or a circuit in the UE #2, the transceiver unit 2110 may be an input/output interface, an interface circuit, an output circuit, an input circuit, a pin, a related circuit, or the like on the chip, the chip system, or the circuit, and the processing unit 2120 may be at least one processor, processing circuit, logic circuit, or the like.

In a possible implementation, the transceiver unit 2110 is configured to receive first control information from a UE #1, where the first control information indicates a first reserved resource of the UE #1, the first reserved resource is related to first sidelink information sent by the UE #1 in a first time unit, and the first time unit includes a time unit in which the UE #1 successfully performs LBT or a next time unit of the time unit in which the UE #1 successfully performs the LBT. The processing unit 2120 is configured to determine, from a resource other than the first reserved resource based on the first control information, a resource used to send second sidelink information.

Optionally, the processing unit 2120 is further configured to exclude the first reserved resource from a candidate resource set.

Optionally, the first reserved resource is a resource determined by the UE #1 based on a sensing result.

Optionally, a channel occupancy time COT that the first reserved resource is in is after a COT that the first time unit is in.

Optionally, the first reserved resource includes a reserved resource that is after a first time interval after a time unit that the first control information is in.

Optionally, the first control information includes a first time interval, or a second time interval and a periodicity, where the second time interval is a difference between the first time interval and the periodicity, and the periodicity is a periodicity for which the UE #1 sends the first sidelink information.

In another possible implementation, the transceiver unit 2110 is configured to receive control information from a UE #1, where the control information indicates a reserved resource of the UE #1. The processing unit 2120 is configured to determine, from a resource other than the reserved resource and a first resource based on the control information, a resource used to send sidelink information, where the first resource is adjacent to the reserved resource in time domain.

Optionally, that the first resource is adjacent to the reserved resource in time domain includes: A time unit that the first resource is in is a preset time period before a time unit that the reserved resource is in, the time unit that the first resource is in is a preset time period after the time unit that the reserved resource is in, or the time unit that the first resource is in includes the preset time period before the time unit that the reserved resource is in and the preset time period after the time unit that the reserved resource is in.

Optionally, the processing unit 2120 is further configured to exclude the reserved resource and the first resource from a candidate resource set.

Optionally, the processing unit 2120 is further configured to skip performing LBT in the time unit that the reserved resource is in and the time unit that the first resource is in; or the processing unit 2120 is further configured to skip measuring, in the time unit that the reserved resource is in and the time unit that the first resource is in, whether a channel is occupied.

It should be understood that a specific process of performing the foregoing corresponding step by each unit is described in detail in the foregoing method embodiments. For brevity, details are not described herein again.

It should be further understood that the apparatus 2100 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another proper component that supports the described function. In an optional example, a person skilled in the art may understand that the apparatus 2100 may be specifically the UE #1 in the foregoing embodiments, and may be configured to perform the procedures and/or the steps corresponding to the UE #1 in the foregoing method embodiments. Alternatively, the apparatus 2100 may be specifically the UE #2 in the foregoing embodiments, and may be configured to perform the procedures and/or the steps corresponding to the UE #2 in the foregoing method embodiments. To avoid repetition, details are not described herein again.

The apparatus 2100 in each of the foregoing solutions has a function of implementing corresponding steps performed by the device (for example, the UE #1 or the UE #2) in the foregoing method. The function may be implemented by hardware, or may be implemented by hardware executing corresponding software. The hardware or the software includes one or more modules corresponding to the foregoing function. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

In addition, the transceiver unit 2110 may alternatively be a transceiver circuit (for example, may include a receiving circuit and a sending circuit), and the processing unit 2120 may be a processing circuit.

It should be noted that, the apparatus in FIG. 21 may be the device (for example, the UE #1 or the UE #2) in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

As shown in FIG. 22, an embodiment of this application provides another communication apparatus 2200. The apparatus 2200 includes a processor 2210. The processor 2210 is configured to execute a computer program or instructions stored in a memory 2220, or read data/signaling stored in the memory 2220, to perform the methods in the foregoing method embodiments. Optionally, there are one or more processors 2210.

Optionally, as shown in FIG. 22, the apparatus 2200 further includes the memory 2220, and the memory 2220 is configured to store the computer program or the instructions and/or the data. The memory 2220 and the processor 2210 may be integrated, or may be disposed separately. Optionally, there are one or more memories 2220.

Optionally, as shown in FIG. 22, the apparatus 2200 further includes a transceiver 2230, and the transceiver 2230 is configured to receive and/or send a signal. For example, the processor 2210 is configured to control the transceiver 2230 to receive and/or send a signal.

In a solution, the apparatus 2200 is configured to implement operations performed by the UE #1 in the foregoing method embodiments.

For example, the processor 2210 is configured to execute the computer program or the instructions stored in the memory 2220, to implement related operations of the UE #1 in the foregoing method embodiments.

In another solution, the apparatus 2200 is configured to implement operations performed by the UE #2 in the foregoing method embodiments.

For example, the processor 2210 is configured to execute the computer program or the instructions stored in the memory 2220, to implement related operations of the UE #2 in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include but is not limited to these memories and any memory of another proper type.

An embodiment of this application further provides a computer-readable storage medium. The computer-readable storage medium stores computer instructions used to implement the method performed by the device (for example, the UE #1 or the UE #2) in the foregoing method embodiments.

For example, when the computer program is executed by a computer, the computer is enabled to implement the method performed by the UE #1 in the foregoing method embodiments.

For another example, when the computer program is executed by a computer, the computer is enabled to implement the method performed by the UE #2 in the foregoing method embodiments.

An embodiment of this application further provides a computer program product, including instructions. When the instructions are executed by a computer, the method performed by the device (for example, the UE #1 or the UE #2) in the foregoing method embodiments is implemented.

An embodiment of this application further provides a communication system, including the foregoing UE #1 and UE #2.

For explanations and beneficial effects of related content in any apparatus provided above, refer to the corresponding method embodiment described above. Details are not described herein again.

In the several embodiments provided in this application, it should be understood that the disclosed apparatus and method may be implemented in other manners. For example, the apparatus embodiments described above are merely examples. For example, division into the units is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

All or some of the foregoing embodiments may be implemented by using software, hardware, firmware, or any combination thereof. When software is used for implementation, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any available medium accessible by a computer, or a data storage device, such as a server or a data center, that includes one or more available media. The available medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the foregoing available medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource selection method, comprising:
performing, by a first terminal device, listen before talk LBT; and
sending, by the first terminal device, sidelink information in a first time unit, wherein the first time unit comprises a time unit in which the first terminal device successfully performs the LBT or a next time unit of the time unit in which the first terminal device successfully performs the LBT.

2. The method according to claim 1, wherein the sending, by the first terminal device, sidelink information in a first time unit comprises:
sending, by the first terminal device, the sidelink information in the first time unit and at least one time unit after the first time unit.

3. The method according to claim 1 or 2, wherein the method further comprises:
sending, by the first terminal device, first control information in a second time unit, wherein the first control information indicates a first reserved resource of the sidelink information, and the first reserved resource is a resource determined by the first terminal device based on a sensing result.

4. The method according to claim 3, wherein
a channel occupancy time COT that the first reserved resource is in is after a COT that the first time unit is in.

5. The method according to claim 3 or 4, wherein
the first control information comprises a first time interval, wherein the first time interval is a time interval between the second time unit and a time unit that the first reserved resource is in; or
the first control information comprises a second time interval and a periodicity, wherein the second time interval is a difference between the first time interval and the periodicity, and the periodicity is a periodicity for which the first terminal device sends the sidelink information.

6. The method according to any one of claims 3 to 5, wherein
the second time unit is in a first COT, the first COT is the COT that the first time unit is in, and the first time unit is before the second time unit; or
the second time unit is in a second COT, and the first COT is before the second COT.

7. The method according to any one of claims 1 to 6, wherein
the sidelink information comprises second control information, the second control information indicates a second reserved resource of the first terminal device, and the second reserved resource and the first time unit are in a same COT.

8. The method according to any one of claims 1 to 7, wherein
identification information indicated by the first control information is the same as identification information indicated by the second control information;
the identification information indicated by the first control information is some bits of the identification information indicated by the second control information; or
some bits of the identification information indicated by the first control information are the identification information indicated by the second control information.

9. The method according to any one of claims 1 to 8, wherein
the first time unit is a resource determined by the first terminal device based on a sensing result.

10. The method according to any one of claims 1 to 9, wherein before the first terminal device successfully performs the LBT, the method further comprises:
successfully performing, by the first terminal device, the LBT at least one time.

11. A resource selection method, comprising:
receiving, by a second terminal device, first control information from a first terminal device, wherein the first control information indicates a first reserved resource of the first terminal device, the first reserved resource is related to first sidelink information sent by the first terminal device in a first time unit, and the first time unit comprises a time unit in which the first terminal device successfully performs LBT or a next time unit of the time unit in which the first terminal device successfully performs the LBT; and
determining, by the second terminal device from a resource other than the first reserved resource based on the first control information, a resource used to send second sidelink information.

12. The method according to claim 11, wherein the method further comprises:
excluding, by the second terminal device, the first reserved resource from a candidate resource set.

13. The method according to claim 11 or 12, wherein
the first reserved resource is a resource determined by the first terminal device based on a sensing result.

14. The method according to any one of claims 11 to 13, wherein
a channel occupancy time COT that the first reserved resource is in is after a COT that the first time unit is in.

15. The method according to any one of claims 11 to 14, wherein
the first reserved resource comprises a reserved resource that is after a first time interval after a time unit that the first control information is in.

16. The method according to claim 15, wherein
the first control information comprises the first time interval, or a second time interval and a periodicity; and
the second time interval is a difference between the first time interval and the periodicity, and the periodicity is a periodicity for which the first terminal device sends the first sidelink information.

17. A resource selection method, comprising:
receiving, by a second terminal device, control information from a first terminal device, wherein the control information indicates a reserved resource of the first terminal device; and
determining, by the second terminal device from a resource other than the reserved resource and a first resource based on the control information, a resource used to send sidelink information, wherein the first resource is adjacent to the reserved resource in time domain.

18. The method according to claim 17, wherein that the first resource is adjacent to the reserved resource in time domain comprises:
a time unit that the first resource is in is a preset time period before a time unit that the reserved resource is in;
the time unit that the first resource is in is a preset time period after the time unit that the reserved resource is in; or
the time unit that the first resource is in comprises the preset time period before the time unit that the reserved resource is in and the preset time period after the time unit that the reserved resource is in.

19. The method according to claim 17 or 18, wherein the method further comprises:
excluding, by the second terminal device, the reserved resource and the first resource from a candidate resource set.

20. The method according to claim 17 or 18, wherein the method further comprises:
skipping performing, by the second terminal device, LBT in the time unit that the reserved resource is in and the time unit that the first resource is in; or
skipping measuring, by the second terminal device in the time unit that the reserved resource is in and the time unit that the first resource is in, whether a channel is occupied.

21. The method according to claim 17 or 18, wherein a time domain length of the first resource is determined based on a channel access priority class of the first terminal device and/or a channel access priority class of the second terminal device.

22. The method according to claim 19, wherein the excluding, by the second terminal device, the first resource from a candidate resource set comprises: excluding, by the second terminal device, the first resource from the candidate resource set when a first condition is met, wherein
the first condition comprises at least one of the following:
a physical layer priority value of the first terminal device is less than a first priority value;
a channel access priority class of the first terminal device is less than the first priority value;
the physical layer priority value of the first terminal device is less than a physical layer priority value of the second terminal device;
a channel access priority of the first terminal device is less than a channel access priority of the second terminal device; or
a channel busy ratio is less than a first congestion threshold.

23. A resource selection method, comprising:
performing, by a first terminal device, listen before talk LBT; and
sending, by the first terminal device, sidelink information in a first time unit, wherein the first time unit comprises a time unit in which the first terminal device successfully performs the LBT or a next time unit of the time unit in which the first terminal device successfully performs the LBT;
sending, by the first terminal device, first control information in a second time unit, wherein the first control information indicates a first reserved resource of the sidelink information, and the first reserved resource is a resource determined by the first terminal device based on a sensing result;
receiving, by a second terminal device, the first control information; and
determining, by the second terminal device from a resource other than the first reserved resource based on the first control information, a resource used to send second sidelink information.

24. The method according to claim 23, wherein the sending, by the first terminal device, sidelink information in a first time unit comprises:
sending, by the first terminal device, the sidelink information in the first time unit and at least one time unit after the first time unit.

25. The method according to claim 23 or 24, wherein the method further comprises:
excluding, by the second terminal device, the first reserved resource from a candidate resource set.

26. The method according to any one of claims 23 to 25, wherein
a channel occupancy time COT that the first reserved resource is in is after a COT that the first time unit is in.

27. The method according to any one of claims 23 to 26, wherein
the first reserved resource comprises a reserved resource that is after a first time interval after a time unit that the first control information is in.

28. The method according to any one of claims 23 to 27, wherein
the first control information comprises the first time interval, wherein the first time interval is a time interval between the second time unit and a time unit that the first reserved resource is in; or
the first control information comprises a second time interval and a periodicity, wherein the second time interval is a difference between the first time interval and the periodicity, and the periodicity is a periodicity for which the first terminal device sends the sidelink information.

29. The method according to any one of claims 23 to 28, wherein
the second time unit is in a first COT, the first COT is the COT that the first time unit is in, and the first time unit is before the second time unit; or
the second time unit is in a second COT, and the first COT is before the second COT.

30. The method according to any one of claims 23 to 29, wherein
the sidelink information comprises second control information, the second control information indicates a second reserved resource of the first terminal device, and the second reserved resource and the first time unit are in a same COT.

31. The method according to any one of claims 23 to 30, wherein
identification information indicated by the first control information is the same as identification information indicated by the second control information;
the identification information indicated by the first control information is some bits of the identification information indicated by the second control information; or
some bits of the identification information indicated by the first control information are the identification information indicated by the second control information.

32. The method according to any one of claims 23 to 31, wherein
the first time unit is a resource determined by the first terminal device based on a sensing result.

33. The method according to any one of claims 23 to 32, wherein before the first terminal device successfully performs the LBT, the method further comprises:
successfully performing, by the first terminal device, the LBT at least one time.

34. A resource selection method, comprising:
sending, by a first terminal device, control information, wherein the control information indicates a reserved resource of the first terminal device;
receiving, by a second terminal device, the control information; and
determining, by the second terminal device from a resource other than the reserved resource and a first resource based on the control information, a resource used to send sidelink information, wherein the first resource is adjacent to the reserved resource in time domain.

35. The method according to claim 34, wherein that the first resource is adjacent to the reserved resource in time domain comprises:
a time unit that the first resource is in is a preset time period before a time unit that the reserved resource is in;
the time unit that the first resource is in is a preset time period after the time unit that the reserved resource is in; or
the time unit that the first resource is in comprises the preset time period before the time unit that the reserved resource is in and the preset time period after the time unit that the reserved resource is in.

36. The method according to claim 34 or 35, wherein the method further comprises:
excluding, by the second terminal device, the reserved resource and the first resource from a candidate resource set.

37. The method according to claim 34 or 35, wherein the method further comprises:
skipping performing, by the second terminal device, LBT in the time unit that the reserved resource is in and the time unit that the first resource is in; or
skipping measuring, by the second terminal device in the time unit that the reserved resource is in and the time unit that the first resource is in, whether a channel is occupied.

38. The method according to claim 34 or 35, wherein a time domain length of the first resource is determined based on a channel access priority class of the first terminal device and/or a channel access priority class of the second terminal device.

39. The method according to claim 34 or 35, wherein
the excluding, by the second terminal device, the first resource from a candidate resource set comprises: excluding, by the second terminal device, the first resource from the candidate resource set when a first condition is met, wherein
the first condition comprises at least one of the following:
a physical layer priority value of the first terminal device is less than a first priority value;
a channel access priority class of the first terminal device is less than the first priority value;
the physical layer priority value of the first terminal device is less than a physical layer priority value of the second terminal device;
a channel access priority of the first terminal device is less than a channel access priority of the second terminal device; and
a channel busy ratio is less than a first congestion threshold.

40. A resource selection apparatus, comprising:
a unit configured to implement the method according to any one of claims 1 to 10, a unit configured to implement the method according to any one of claims 11 to 16, or a unit configured to implement the method according to any one of claims 17 to 22.

41. A communication apparatus, comprising:
a processor, configured to execute a computer program stored in a memory, so that the apparatus performs the method according to any one of claims 1 to 10, the apparatus performs the method according to any one of claims 11 to 16, or the apparatus performs the method according to any one of claims 17 to 22.

42. The apparatus according to claim 41, wherein the apparatus further comprises the memory.

43. A chip, comprising a logic circuit and a communication interface, wherein the communication interface is configured to receive to-be-processed data and/or information, and transmit the to-be-processed data and/or information to the logic circuit, the logic circuit is configured to perform the resource selection method according to any one of claims 1 to 22, and the communication interface is further configured to output a selected resource.

44. A computer-readable storage medium, wherein the computer-readable storage medium stores a computer program; and when the computer program is run on a computer, the computer is enabled to perform the method according to any one of claims 1 to 10, the computer is enabled to perform the method according to any one of claims 11 to 16, or the computer is enabled to perform the method according to any one of claims 17 to 22.

45. A computer program product, wherein the computer program product comprises instructions used to perform the method according to any one of claims 1 to 10, the computer program product comprises instructions used to perform the method according to any one of claims 11 to 16, or the computer program product comprises instructions used to perform the method according to any one of claims 17 to 22.

46. A communication system, comprising a first terminal device and a second terminal device, wherein the first terminal device is configured to perform the method according to any one of claims 1 to 10, and the second terminal device configured is to perform the method according to any one of claims 11 to 16.

47. A communication system, comprising a first terminal device and a second terminal device, wherein the first terminal device and the second terminal device are configured to perform the method according to any one of claims 34 to 39.

48. A communication apparatus, wherein the communication apparatus is configured to perform the method according to any one of claims 1 to 10.

49. A communication apparatus, wherein the communication apparatus is configured to perform the method according to any one of claims 11 to 16.

50. A communication apparatus, wherein the communication apparatus is configured to perform the method according to any one of claims 17 to 22.
